# EUROPEAN PATENT APPLICATION

(11) **EP 4 108 328 A1**
(43) Date of publication of application: **28.12.2022**
(21) Application number: 20919586.6
(22) Date of filing: 02.12.2020
(51) Int. Cl.: B01J 47/00, B01J 47/12, C02F 1/42

(54) **ION EXCHANGE EQUIPMENT**

(30) Priority: 18.02.2020 JP 2020024851
(71) Applicant: Kabushiki Kaisha F.C.C., Hamamatsu-shi, Shizuoka 431-1394 (JP)
(72) Inventor: ENDO Makiko, Hamamatsu-shi, Shizuoka 431-1304 (JP); INO Kentaro, Hamamatsu-shi, Shizuoka 431-1304 (JP); HIGUCHI Hironori, Hamamatsu-shi, Shizuoka 431-1304 (JP)
(74) Representative: Cohausz & Florack
(86) International application number: PCT/JP2020/044921
(87) International publication number: WO 2021/166367

(57) **Abstract**

Provided is an inexpensive ion-exchange apparatus having an increased ion-exchange capacity. An ion-exchange apparatus includes a raw-water tank 1 containing a liquid to be treated, the liquid being composed of a liquid that contains impurity ions, a treatment tank 2 containing a treatment material that contains exchange ions composed of ions exchangeable with the impurity ions, and an ion exchanger 3 that permits the passage of the impurity ions from the raw-water tank 1 to the treatment tank 2 and the passage of the exchange ions from the treatment tank 2 to the raw-water tank 1, in which the treatment material in the treatment tank 2 has a higher molarity than the liquid to be treated in the raw-water tank 1.

## Description

### Technical Field

The present invention relates to an ion-exchange apparatus capable of removing impurity ions from a liquid to be treated.

### Background Art

Various ion-exchange apparatuses have recently been reported for softening industrial water, producing pure water, and purifying, for example, drinking water and cooling water for vehicles by removing impurity ions in liquids to be treated. For example, ion-exchange apparatuses packed with ion-exchange resins that are ion exchangers formed into granular shapes have been reported. For example, hitherto, there has been a method in which a granular ion-exchange resin is packed into a container and a liquid to be treated is passed through the container to adsorb and remove impurity ions, as disclosed in, for example, Patent Literatures 1 and 2.

### Citation List

### Patent Literature

PTL 1: Japanese Unexamined Patent Application Publication No. 62-14948
PTL 2: Japanese Unexamined Patent Application Publication No. 2002-136968

### Summary of Invention

### Technical Problem

However, in the above-described known techniques, ion-exchange capacities are as small as about 1.5 to 2 meq/cm³. Thus, when higher performance is required, there are problems that, for example, expensive ion-exchange resins are required to lead to an increase in production cost, and large holding members of ion-exchange resins are required to lead to an increase in the size of ion-exchange apparatuses.

The present invention has been made in view of the foregoing circumstances. It is an object of the present invention to provide an ion-exchange apparatus capable of increasing an ion-exchange capacity without requiring an expensive ion exchanger. Solution to Problem

According to an invention described in Claim 1, an ion-exchange apparatus includes a raw-water section containing a liquid to be treated, the liquid being composed of a liquid that contains impurity ions, a treatment section containing a treatment material that contains exchange ions composed of ions exchangeable with the impurity ions, and an ion exchanger that permits passage of the impurity ions from the raw-water section to the treatment section and passage of the exchange ions from the treatment section to the raw-water section, in which the treatment material in the treatment section has a higher molarity than the liquid to be treated in the raw-water section.

According to an invention described in Claim 2, in the ion-exchange apparatus according to Claim 1, the treatment material in the treatment section has a molarity of 2 mol/L or more.

According to an invention described in Claim 3, in the ion-exchange apparatus according to Claim 1 or 2, the raw-water section is capable of allowing the liquid to be treated to flow.

According to an invention described in Claim 4, in the ion-exchange apparatus according to Claim 3, the treatment section is capable of allowing the treatment material to flow in the direction opposite to the liquid to be treated.

According to an invention described in Claim 5, the ion-exchange apparatus according to Claim 3 or 4 further includes an auxiliary treatment section packed with a granular ion exchanger, in which the auxiliary treatment section is connected downstream of the raw-water section, and the liquid to be treated passed through the raw-water section is capable of flowing into the auxiliary treatment section.

According to an invention described in Claim 6, in the ion-exchange apparatus according to any one of Claims 1 to 5, the raw-water section contains a packed ion exchanger in contact with the ion exchanger.

According to an invention described in Claim 7, in the ion-exchange apparatus according to Claim 6, the packed ion exchanger is composed of a spherical or fibrous ion exchanger.

According to an invention described in Claim 8, in the ion-exchange apparatus according to any one of Claims 1 to 7, the treatment section is provided with a stirring means capable of stirring the treatment material.

According to an invention described in Claim 9, in the ion-exchange apparatus according to any one of Claims 1 to 8, a sealing means that seals at least one of a joint portion between the raw-water section and the ion exchanger and a joint portion between the treatment section and the ion exchanger is disposed.

According to an invention described in Claim 10, in the ion-exchange apparatus according to any one of Claims 1 to 9, the exchange ions are composed of group 1 element ions or hydroxide ions.

According to an invention described in Claim 11, in the ion-exchange apparatus according to any one of Claims 1 to 10, the treatment material contains a weak acid or a weak base.

According to an invention described in Claim 12, in the ion-exchange apparatus according to any one of Claims 1 to 11, the treatment material is a solution containing group 1 element ions.

According to an invention described in Claim 13, in the ion-exchange apparatus according to any one of Claims 1 to 12, the ion-exchange apparatus includes a first treatment section in which the exchange ions are composed of group 1 element ions and a second treatment section in which the exchange ions are hydroxide ions, in which each of the first treatment section and the second treatment section is connected to the raw-water section with the ion exchanger provided therebetween.

According to an invention described in Claim 14, in the ion-exchange apparatus according to any one of Claims 1 to 13, the treatment material contained in the treatment section is composed of a material having a molecular weight of 80 g/mol or more.

According to an invention described in Claim 15, in the ion-exchange apparatus according to any one of Claims 1 to 14, the ion exchanger has a tubular shape, a flat-film shape, or a hollow-fiber shape.

According to an invention described in Claim 16, in the ion-exchange apparatus according to any one of Claims 1 to 15, the ion exchanger is composed of an ion-exchange resin membrane.

According to an invention described in Claim 17, in the ion-exchange apparatus according to any one of Claims 1 to 16, the ion exchanger is composed of a double-network gel.

According to an invention described in Claim 18, in the ion-exchange apparatus according to any one of Claims 1 to 17, the ion exchanger is disposed on a support composed of a sheet-like fiber layer.

### Advantageous Effects of Invention

According to the present invention, the ion-exchange apparatus includes the raw-water section containing a liquid to be treated, the liquid to be treated being composed of a liquid that contains impurity ions, the treatment section containing a treatment material that contains exchange ions composed of ions exchangeable with the impurity ions, and the ion exchanger that permits the passage of the impurity ions from the raw-water section to the treatment section and the passage of the exchange ions from the treatment section to the raw-water section, in which the treatment material in the treatment section has a higher molarity than the liquid to be treated in the raw-water section. Thus, it is possible to provide the inexpensive ion-exchange apparatus without using a large amount of an expensive ion exchanger. Additionally, the amount (density) of the exchangeable ions in the treatment material is larger than those of existing ion-exchange resins, thus enabling an increase in ion-exchange capacity per volume.

### Brief Description of Drawings

[Fig. 1] Fig. 1 is a schematic view illustrating an ion-exchange apparatus according to a first embodiment of the present invention.
[Fig. 2] Fig. 2 is a schematic view illustrating another ion-exchange apparatus according to the embodiment of the present invention.
[Fig. 3] Fig. 3 is a schematic view illustrating another ion-exchange apparatus according to the embodiment of the present invention.
[Fig. 4] Fig. 4 is a schematic view illustrating another ion-exchange apparatus according to the embodiment of the present invention.
[Fig. 5] Fig. 5 is a schematic view illustrating another ion-exchange apparatus according to the embodiment of the present invention.
[Fig. 6] Fig. 6 is a schematic view illustrating another ion-exchange apparatus according to the embodiment of the present invention.
[Fig. 7] Fig. 7 is a schematic view illustrating an ion-exchange apparatus according to a second embodiment of the present invention.
[Fig. 8] Fig. 8 is a schematic view illustrating an ion-exchange apparatus according to yet another embodiment of the present invention.
[Fig. 9] Fig. 9 is a perspective view illustrating the ion-exchange apparatus according to the embodiment.
[Fig. 10] Fig. 10 is a schematic view illustrating an ion-exchange apparatus according to yet another embodiment of the present invention.
[Fig. 11] Fig. 11 is a schematic view illustrating an ion-exchange apparatus according to yet another embodiment of the present invention.
[Fig. 12] Fig. 12 is a schematic view illustrating an ion-exchange apparatus according to yet another embodiment of the present invention.
[Fig. 13] Fig. 13 is a schematic view illustrating an ion-exchange apparatus according to a third embodiment of the present invention.
[Fig. 14] Fig. 14 is a graph illustrating a technical effect of the ion-exchange apparatus according to the embodiment.
[Fig. 15] Fig. 15 is a schematic view illustrating an ion-exchange apparatus according to a fourth embodiment of the present invention.
[Fig. 16] Fig. 16 is a graph illustrating a technical effect of the ion-exchange apparatus according to the embodiment.
[Fig. 17] Fig. 17 is a schematic view illustrating an ion-exchange apparatus according to a sixth embodiment of the present invention.
[Fig. 18] Fig. 18 is a schematic view illustrating an ion-exchange apparatus according to another embodiment of the present invention.
[Fig. 19] Fig. 19 is a schematic view illustrating an ion-exchange apparatus according to a seventh embodiment of the present invention.
[Fig. 20] Fig. 20 is a schematic view illustrating an ion-exchange apparatus according to another embodiment of the present invention.
[Fig. 21] Fig. 21 is a table presenting the ion-exchange capacities in Examples 1 to 8 according to the present invention and Comparative example 1.
[Fig. 22] Fig. 22 is a table presenting ion-exchange capacities in Examples 9 to 15 according to the present invention.
[Fig. 23] Fig. 23 is a table presenting ion-exchange capacities in Examples 16 and 17 according to the present invention.
[Fig. 24] Fig. 24 is a table presenting ion-exchange capacities in Examples 18 and 21 according to the present invention.
[Fig. 25] Fig. 25 is a table presenting ion-exchange capacities in Examples 22 to 28 according to the present invention.
[Fig. 26] Fig. 26 is a table presenting ion-exchange capacities in Examples 29 and 30 according to the present invention.
[Fig. 27] Fig. 27 is a table presenting ion-exchange capacities in Examples 31 and 33 according to the present invention.
[Fig. 28] Fig. 28 is a table presenting ion-exchange capacities in Examples 34 and 35 according to the present invention.
[Fig. 29] Fig. 29 is a table presenting ion-exchange capacities in Examples 36 and 37 according to the present invention.
[Fig. 30] Fig. 30 is a table presenting ion-exchange capacities in Examples 38 and 39 according to the present invention.
[Fig. 31] Fig. 31 is a table presenting ion-exchange capacities in Examples 40 and 41 according to the present invention.
[Fig. 32] Fig. 32 is a table presenting experimental conditions in Examples 42 to 46 according to the present invention.
[Fig. 33] Fig. 33 is a table presenting ion-exchange capacities in Examples 42 to 46 according to the present invention.
[Fig. 34] Fig. 34 is a graph illustrating the relationship between the amount of leakage and the molecular weight of a treatment material according to the present invention.

### Description of Embodiments

Embodiments of the present invention will be specifically described below with reference to the drawings.

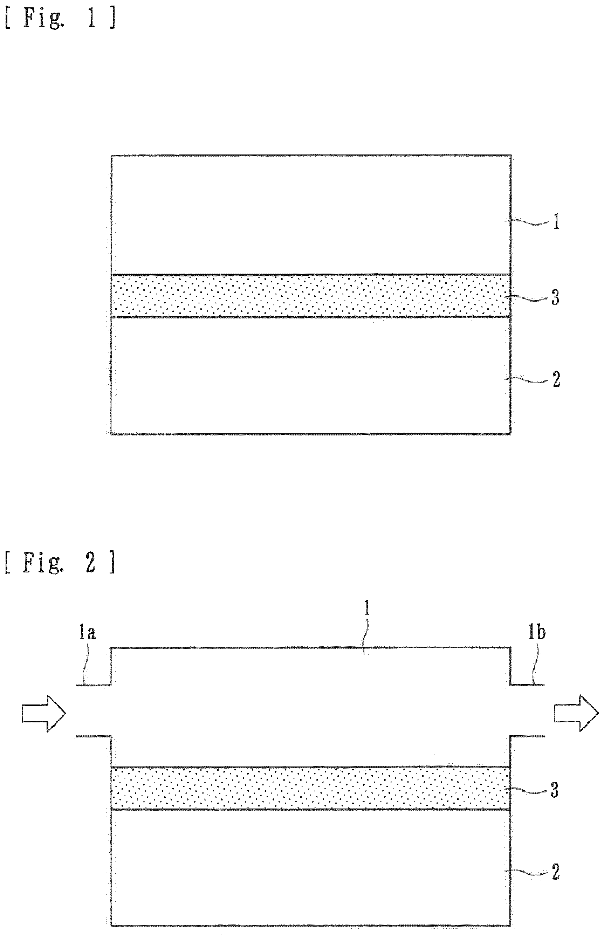

An ion-exchange apparatus according to this embodiment is used to soften industrial water, produce pure water, or purify, for example, drinking water or cooling water for vehicles by removing impurity ions in liquids to be treated. An example of an ion-exchange apparatus according to a first embodiment is, as illustrated in Fig. 1, an ion-exchange apparatus including a raw-water tank 1 (raw-water section), a treatment tank 2 (treatment section), and an ion exchanger 3.

The raw-water tank 1 is a section containing a liquid to be treated, the liquid containing impurity ions. Examples of the liquid to be treated include solutions containing K⁺ (potassium ion) and Na⁺ (sodium ion) as impurity cations and solutions containing CO₃²⁻ (carbonate ion) and Cl⁻ (chloride ion) as impurity anions. The raw-water tank 1 according to the present embodiment contains a predetermined volume of a liquid to be treated (water to be treated), the liquid containing these impurity cations and impurity anions.

The treatment tank 2 is a section containing a treatment material (liquid in the present embodiment) that contains exchange ions exchangeable with impurity ions. Examples thereof include acid-containing solution tanks and alkali-containing solution tanks. In the case of an acid-containing solution tank, for example, a solution containing H⁺ (hydrogen ion) as an exchange ion (specifically, a solution containing Cl⁻in addition to H⁺ as an exchange ion) is contained. In the case of an alkali-containing solution tank, for example, a solution containing OH- (hydroxide ion) as an exchange ion (specifically, a solution containing Na⁺ in addition to OH⁻ as an exchange ion) is contained.

The ion exchanger 3 permits the passage of impurity ions from the raw-water tank 1 to the treatment tank 2 or the passage of exchange ions from the treatment tank 2 to the raw-water tank 1. For example, an ion-exchange resin, a chelating resin, phosphogypsum, Nafion, zeolite, hydrotalcite, or a metal oxide can be used. The ion exchanger 3 according to the present embodiment is disposed between the raw-water tank 1 and the treatment tank 2 and has a flat-film shape. When impurity ions are cations, a cation exchanger is used and functions by allowing only impurity ions and exchangeable cations in the treatment material to pass therethrough mutually. When impurity ions are anions, an anion exchanger is used and functions by allowing only impurity ions and exchangeable anions in the treatment material to pass therethrough mutually. In this way, impurity ions can be removed from the raw water.

In the ion-exchange apparatus according to the present embodiment, the solution (treatment material) in the treatment tank 2 has a higher molarity than the liquid to be treated in the raw-water tank 1. That is, the concentration (molarity) of the exchange ions in the treatment tank 2 is set higher than that of the impurity ions in the liquid to be treated in the raw-water tank 1. Thus, when the impurity ions are adsorbed by the ion exchanger 3, the impurity ions move in the ion exchanger 3 because of the concentration difference and are released into the treatment tank 2, and the exchange ions in the treatment tank 2 move in the ion exchanger 3 and are released into the raw-water tank 1.

That is, when impurity ions in the raw-water tank 1 come into contact with the ion exchanger 3 owing to the concentration difference or ion selectivity, the impurity ions are replaced with ions of the ion exchanger 3, and the ions are sequentially replaced up to a portion of the ion exchanger 3 on the treatment tank 2 side. In this way, the impurity ions coming into contact with the ion exchanger 3 pass through the ion exchanger 3 from the raw-water tank 1 toward the treatment tank 2. The impurity ions are then replaced with the exchange ions in the treatment tank 2 and move into the treatment tank 2 owing to a high molarity (exchange ion concentration) in the treatment tank 2. Thereby, the impurity ions in the raw-water tank 1 can be removed.

For example, an ion-exchange apparatus will be described in which a membrane-like ion exchanger 3 (anion exchanger) represented by a structural formula containing OH⁻ is used, a solution containing Cl⁻ as an impurity ion (anion) is contained in the raw-water tank 1, and a treatment material containing exchange ions, such as Na⁺ and OH⁻, is contained in the treatment tank 2. In this case, Cl⁻ as an impurity ion in the raw-water tank 1 is replaced with OH- in the ion exchanger 3 and taken into the ion exchanger 3, and then the taken impurity ions (Cl⁻) are sequentially replaced with OH⁻ ions in the ion exchanger 3 because of ion selectivity (characteristics in which ions having a higher valence or a larger atomic or molecular size are more easily exchanged).

In the present embodiment, the treatment material in the treatment tank 2 has a higher molarity than the liquid to be treated in the raw-water tank 1, so that the impurity ions (Cl⁻) taken into the ion exchanger 3 are replaced with the exchange ions (OH⁻) in the treatment tank 2. Thereby, the impurity ions (Cl⁻) in the raw-water tank 1 are moved to the treatment tank 2 and removed. Na⁺, which is a cation, repels N⁺ in the ion exchanger 3 and thus does not readily move into the raw-water tank 1.

When the treatment tank 2 contains a solution containing an acid, anions in the raw-water tank 1 repel anions, such as sulfonic groups, in the ion exchanger 3 (cation exchanger) and cannot pass through the ion exchanger 3. When the treatment tank 2 contains a solution containing an alkali, cations in the raw-water tank 1 repel cations, such as quaternary ammonium groups, in the ion exchanger 3 (anion exchanger) and cannot pass through the ion exchanger 3.

As described above, the ion exchanger 3 according to the present embodiment is formed of a film-like member having the properties of blocking the passage of ions with different electric charges and different signs and allowing the passage of only ions with the same electric charge and the same sign, and is configured for the purpose of filtering impurity ions. The ion exchanger 3 that allows only cations to pass therethrough is referred to as a positive ion-exchange membrane (cation-exchange membrane). The ion exchanger 3 that allows only anions to pass therethrough is referred to as a negative ion-exchange membrane (anion-exchange membrane).

Thus, the pressure in the-raw water tank 1 is preferably higher than the pressure in the treatment tank 2 (i.e., the liquid pressure of the liquid to be treated in the raw-water tank 1 is higher than the pressure of the solution in the treatment tank 2). In this case, it is possible to suppress the passage of ions that are contained in the treatment tank 2 and that are not desired to be moved into the raw-water tank 1 through the ion exchanger 3. For example, the liquid to be treated is allowed to flow in the raw-water tank 1, and the pressure in the raw-water tank 1 can be higher than the pressure in the treatment tank 2 by the flow resistance.

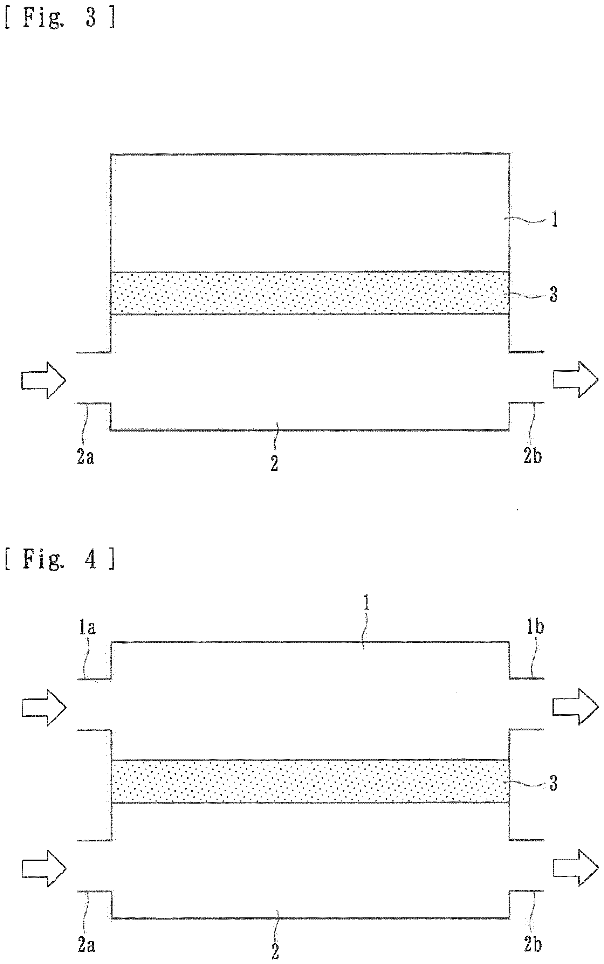

The liquid to be treated in the raw-water tank 1 and the solution (treatment material) in the treatment tank 2 according to the present embodiment are in a nonflowing state. As illustrated in Fig. 2, the raw-water tank 1 may include an inlet 1a and an outlet 1b to allow the liquid to be treated in the raw-water tank 1 to flow. As illustrated in Fig. 3, the treatment tank 2 may include an inlet 2a and an outlet 2b to allow the solution (treatment material) in the treatment tank 2 to flow. As illustrated in Fig. 4, the raw-water tank 1 may include the inlet 1a and the outlet 1b to allow the liquid to be treated to flow, and the treatment tank 2 may include the inlet 2a and the outlet 2b to allow the treatment material to flow. When only the liquid to be treated is allowed to flow, the impurity ions can be continuously removed with a simple configuration, which is preferred.

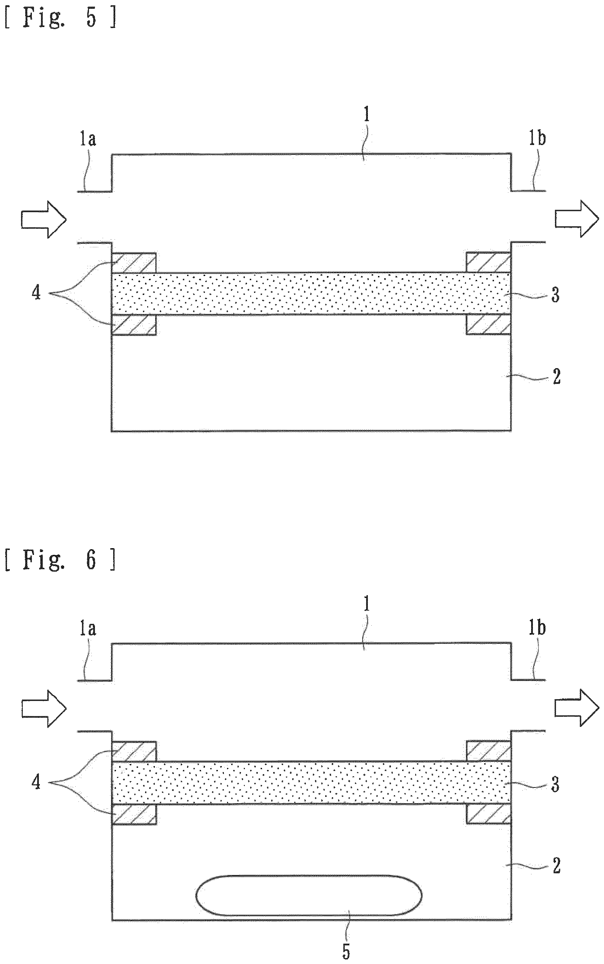

As illustrated in Fig. 5, sealing means 4, such as gaskets, may be provided at a joint between the raw-water tank 1 (raw-water section) and the ion exchanger 3 and at a joint between the treatment tank 2 (treatment section) and the ion exchanger 3. In this case, it is sufficient that the sealing means 4 is disposed at at least one of the joint between the raw-water tank 1 (raw-water section) and the ion exchanger 3 and the joint between the treatment tank 2 (treatment section) and the ion exchanger 3.

As illustrated in Fig. 6, the treatment tank 2 (treatment section) may be provided with a stirring means 5, such as an impeller, capable of stirring the solution (treatment material). In this case, the impurity ions that have passed through the ion exchanger 3 from the liquid to be treated in the raw-water tank 1 and have reached the treatment tank 2 are mixed in the solution (treatment material) and then stirred with the stirring means 5, thereby enabling a further improvement in ion-exchange efficiency.

In the ion-exchange apparatus according to the present embodiment, the solution (treatment material) in the treatment tank 2 preferably has a molarity of 2 mol/L or more. A molarity of 2 mol/L or more results in an ion-exchange apparatus having a higher ion-exchange capacity than existing ion-exchange resins. The exchange ions in the treatment tank 2 are preferably composed of group 1 element ions or hydroxide ions, and may contain a weak acid or a weak base. The ion exchanger 3 may be composed of an ion-exchange resin membrane or a double-network gel or may be disposed on a support composed of a sheet-like fiber layer.

The double-network gel (DN gel) is composed of a polymer having a three-dimensional network structure insoluble in various solvents and a swollen body thereof and is composed of a gel having high-strength and low-friction performance. More specifically, the double-network gel is composed of a hard brittle strong electrolyte gel and a soft neutral gel that are interpenetrated, and has a mutually independent double polymer network structure. The use of the double-network gel is preferred because the ion exchanger has high strength and does not break easily.

Preferably, the sheet-like fiber layer as a support is composed of cellulose fibers and has a thickness dimension of, for example, 0.05 mm or more and 0.3 mm or less, preferably about 0.15 mm. More specifically, the fiber layer is preferably obtained by using pulp, such as cellulose, or PET fibers with high water resistance and chemical resistance as a material and forming the material into a sheet-like (paperlike) shape by a sheet-making method (paper-making method).

A second embodiment according to the present invention will be described below.

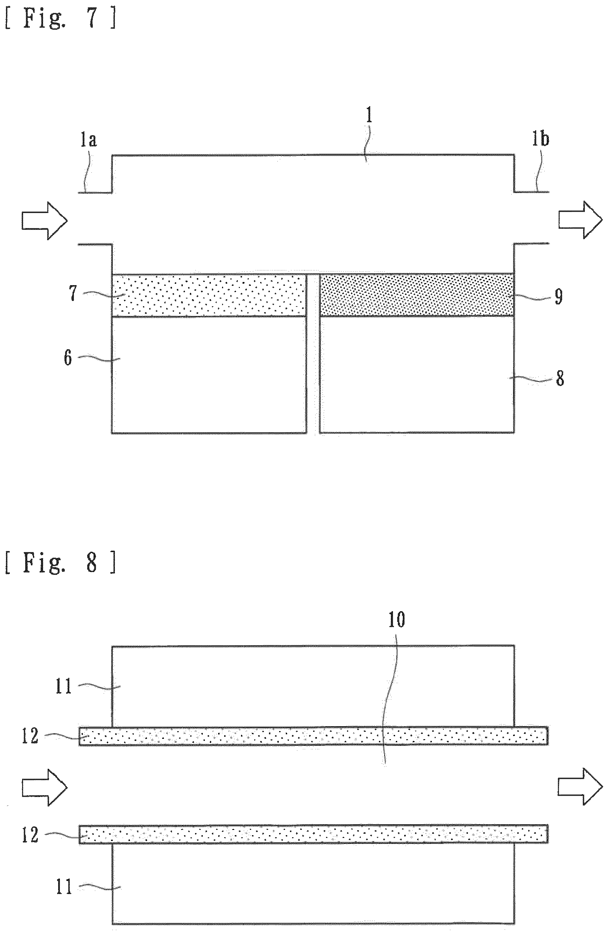

As with the first embodiment, an ion-exchange apparatus according to this embodiment is used to soften industrial water, produce pure water, or purify, for example, drinking water or cooling water for vehicles by removing impurity ions in liquids to be treated, and, as illustrated in Fig. 7, includes the raw-water tank 1, a first treatment tank 6 (first treatment section), a cation exchanger 7, a second treatment tank 8 (second treatment section), and an anion exchanger 9.

The raw-water tank 1 according to the present embodiment includes the inlet 1a and the outlet 1b in such a manner that a liquid to be treated can flow. As with the first embodiment, in the raw-water tank 1, a solution containing K⁺ (potassium ion) and Na⁺ (sodium ion) as impurity cations or a solution containing CO₃²⁻ (carbonate ion) and Cl⁻ (chloride ion) as impurity anions is contained and flows. However, the types of impurity ions are not limited to these.

The first treatment tank 6 is a section containing a solution (treatment material) that contains exchange ions composed of group 1 element ions, for example, a solution that contains H⁺ (hydrogen ion) serving as an exchange ion (specifically, a solution that contains Cl⁻ in addition to H⁺ serving as the exchange ion). The second treatment tank 8 is a section containing a solution (treatment material) that contains exchange ions composed of hydroxide ions, for example, a solution that contains OH⁻(hydroxide ion) serving as an exchange ion (specifically, a solution that contains Na⁺ in addition to OH- serving as the exchange ion).

The first treatment tank 6 and the second treatment tank 8 communicate with the raw-water tank 1 with the ion exchangers (the cation exchanger 7 and the anion exchanger 9, respectively) provided therebetween. The cation exchanger 7 and the anion exchanger 9 are similar to the ion exchanger 3 in the first embodiment and permit the passage of impurity ions from the raw-water tank 1 to the first treatment tank 6 or the passage of exchange ions from the second treatment tank 8 to the raw-water tank 1.

In the ion-exchange apparatus according to the present embodiment, each of the solution (treatment material) in the first treatment tank 6 and the solution (treatment material) in the second treatment tank 8 has a higher molarity than the liquid to be treated in the raw-water tank 1. That is, the concentration (molarity) of the exchange ions contained in each of the first treatment tank 6 and the second treatment tank 8 is set higher than that of the impurity ions in the liquid to be treated contained in the raw-water tank 1. Thus, when the impurity ions are adsorbed by the cation exchanger 7 and the anion exchanger 9, the impurity ions move in the cation exchanger 7 and the anion exchanger 9 because of the concentration difference and are released into the first treatment tank 6 and the second treatment tank 8. The exchange ions in the first treatment tank 6 and the second treatment tank 8 move in the cation exchanger 7 and the anion exchanger 9 and are released into the raw-water tank 1.

That is, on the first treatment tank 6 side, when impurity ions in the raw-water tank 1 come into contact with the cation exchanger 7, the impurity ions are replaced with ions of the cation exchanger 7, and the ions are sequentially replaced up to a portion of the cation exchanger 7 adjacent to the first treatment tank 6 because of the concentration difference and ion selectivity. Thus, the impurity ions that have come into contact with the cation exchanger 7 pass through the cation exchanger 7 from the raw-water tank 1 toward the first treatment tank 6, are replaced with the exchange ions in the first treatment tank 6 and move into the first treatment tank 6 because of a high molarity (exchange ion concentration) in the first treatment tank 6. In this way, impurities (cationic impurities) in the raw-water tank 1 can be moved into the first treatment tank 6 and removed.

On the second treatment tank 8 side, when impurity ions in the raw-water tank 1 come into contact with the anion exchanger 9, the impurity ions are replaced with ions of the anion exchanger 9, and the ions are sequentially replaced up to a portion of the anion exchanger 9 adjacent to the second treatment tank 8 because of ion selectivity. Thus, the impurity ions that have come into contact with the anion exchanger 9 pass through the anion exchanger 9 from the raw-water tank 1 toward the second treatment tank 8, are replaced with the exchange ions in the second treatment tank 8, and move into the second treatment tank 8 because of a high molarity (exchange ion concentration) in the second treatment tank 8. In this way, impurities (anionic impurities) in the raw-water tank 1 can be moved into the second treatment tank 8 and removed.

On the first treatment tank 6 side, anions in the raw-water tank 1 repel anions, such as sulfonic groups, in the cation exchanger 7 and cannot pass through the cation exchanger 7. On the second treatment tank 8 side, the cations in the raw-water tank 1 repel cations, such as quaternary ammonium groups, in the anion exchanger 9 and cannot pass through the anion exchanger 9.

Thus, the pressure in the-raw water tank 1 is preferably higher than the pressure in the first treatment tank 6 and the second treatment tank 8 (i.e., the liquid pressure of the liquid to be treated in the raw-water tank 1 is higher than the pressure of the solution of each of the first treatment tank 6 and the second treatment tank 8). In this case, it is possible to suppress the passage of ions that are contained in the first treatment tank 6 and the second treatment tank 8 and that are not desired to be moved into the raw-water tank 1 through the cation exchanger 7 and the anion exchanger 9. For example, when the liquid to be treated flows in the raw-water tank 1, the pressure in the raw-water tank 1 can be higher than the pressure in the first treatment tank 6 and the second treatment tank 8 by the flow resistance.

As illustrated in Fig. 5 in the first embodiment, the sealing means 4, such as gaskets, may be provided at joints between the raw-water tank 1 (raw-water section) and the cation exchanger 7 and between the raw-water tank 1 (raw-water section) and the anion exchanger 9, and at joints between the first treatment tank 6 and the cation exchanger 7 and between the second treatment tank 8 and the anion exchanger 9. In this case, as in the first embodiment, it is sufficient that the sealing means 4 is disposed at at least one of the joint between the raw-water tank 1 (raw-water section) and the cation exchanger 7 and between the raw-water tank 1 (raw-water section) and the anion exchanger 9 and the joint between the first treatment tank 6 and the cation exchanger 7 and between the second treatment tank 8 and the anion exchanger 9.

As illustrated in Fig. 6 in the first embodiment, the first treatment tank 6 and the second treatment tank 8 may be provided with the stirring means 5, such as impellers, capable of stirring the solutions (treatment materials). In this case, the impurity ions that have passed through the cation exchanger 7 and the anion exchanger 9 from the liquid to be treated in the raw-water tank 1 and have reached the first treatment tank 6 and the second treatment tank 8 are mixed in the solution (treatment material) and then stirred with the stirring means 5, thereby enabling a further improvement in ion-exchange efficiency.

In the ion-exchange apparatus according to the present embodiment, each of the solutions (treatment materials) in the treatment tanks 6 and 8 preferably has a molarity of 2 mol/L or more. The exchange ions in the treatment tanks 6 and 8 are preferably composed of group 1 element ions or hydroxide ions, and may contain a weak acid or a weak base. Each of the cation exchanger 7 and the anion exchanger 9 may be composed of, for example, an ion-exchange resin membrane, a chelating resin, phosphogypsum, Nafion, zeolite, hydrotalcite, a metal oxide, or a double-network gel, or may be disposed on a support composed of a sheet-like fiber layer.

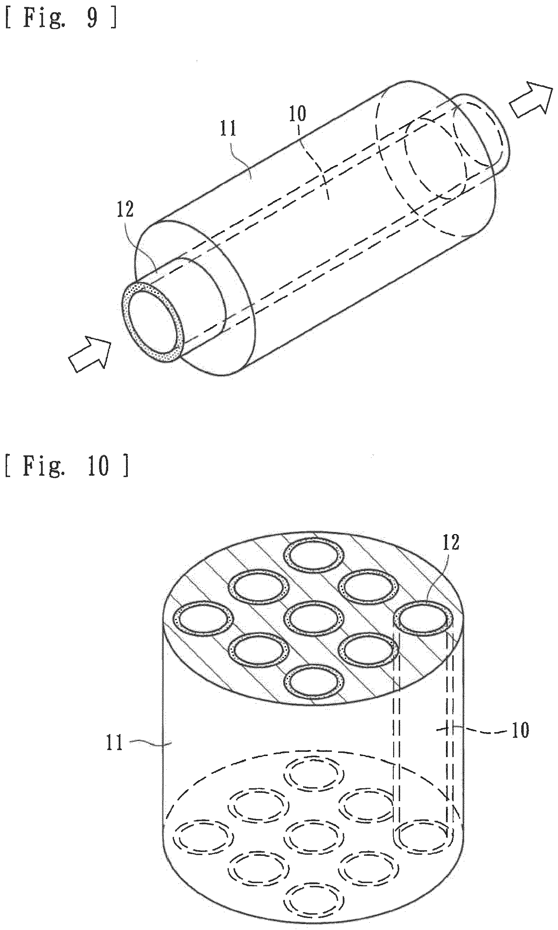

In the first and second embodiments described above, the ion exchanger 3, the cation exchanger 7, and the anion exchanger 9 are in the form of a flat-film shape. As illustrated in Figs. 8 and 9, however, a tubular (pipe-shaped) ion exchanger 12 may be used. In this case, the inside of the tubular ion exchanger 12 is a raw-water section 10 similar to the raw-water tank 1, and the outside thereof is a treatment section 11 similar to the treatment tank 2, the first treatment tank 6, or the second treatment tank 8.

As with the above-described embodiment, an ion-exchange apparatus including the tubular ion exchanger 12 includes the raw-water section 10 containing a liquid to be treated, the liquid being composed of a liquid that contains impurity ions and being allowed to flow, the treatment section 11 containing a solution (treatment material) that contains exchange ions composed of ions exchangeable with the impurity ions, and the ion exchanger 12 that permits the passage of the impurity ions from the raw-water section 10 to the treatment section 11 and the passage of the exchange ions from the treatment section 11 to the raw-water section 10. Also in this case, the molarity of the solution (treatment material) in the treatment section 11 is set higher than that of the liquid to be treated in the raw-water section 10. Thus, impurity ions in the raw-water section 10 can be removed by allowing the liquid to be treated to flow in the tubular ion exchanger 12.

As illustrated in Fig. 10, in the case of hollow fiber ion exchangers 12, a large number of ion exchangers 12 may be arranged in the treatment section 11. In this case, the inside of each hollow fiber ion exchanger 12 serves as the raw-water section 10. The molarity of the solution (treatment material) in the treatment section 11 is set higher than that of a liquid to be treated in the raw-water section 10. Impurity ions in the raw-water section 10 can be removed by allowing the liquid to be treated to flow in each hollow fiber ion exchanger 12. However, the raw-water section and the treatment section may be reversed.

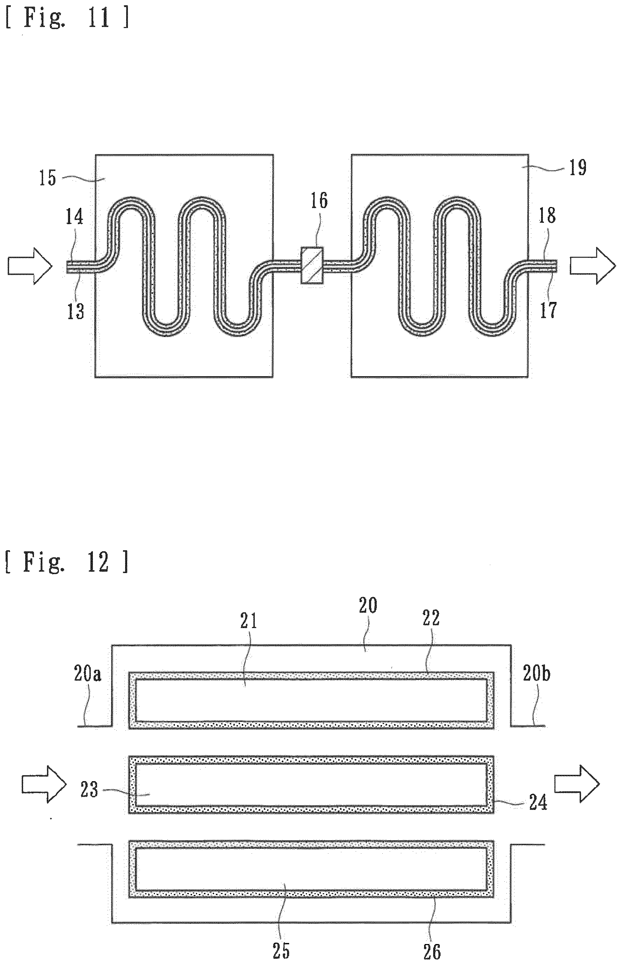

As illustrated in Fig. 11, an ion-exchange apparatus may be used in which a cation exchanger 14 (similar to the cation exchanger 7 of the second embodiment) and an anion exchanger 18 (similar to the anion exchanger 9 of the second embodiment) meandering and extending in a first treatment section 15 and a second treatment section 19, respectively, are disposed and the inside of the cation exchanger 14 and the inside of the anion exchanger 18 serve as raw-water sections 13 and 17, respectively. In this case, as in the second embodiment, the impurity cations in the raw-water section 13 can be moved to the first treatment section 15 by the cation exchanger 14, and the impurity anions in the raw-water section 17 can be moved to the second treatment section 19 by the anion exchanger 18, thereby enabling the removal of the respective impurity ions. Reference numeral 16 in Fig. 11 denotes a connecting member between the cation exchanger 14 and the anion exchanger 18.

As illustrated in Fig. 12, an ion-exchange apparatus may be used in which multiple ion exchangers 22, 24, and 26 are disposed in a raw-water section 20 and the insides of the ion exchangers 22, 24, and 26 serve as a first treatment section 21, a second treatment section 23, and a third treatment section 25, respectively. In this case, impurity ions in the raw-water section 20 can be removed by moving the impurity ions into the first treatment section 21, the second treatment section 23, and the third treatment section 25 through the ion exchangers 22, 24, and 26. The raw-water section 20 includes an inlet 20a and an outlet 20b in such a manner that a liquid to be treated can be allowed to flow.

A third embodiment according to the present invention will be described below.

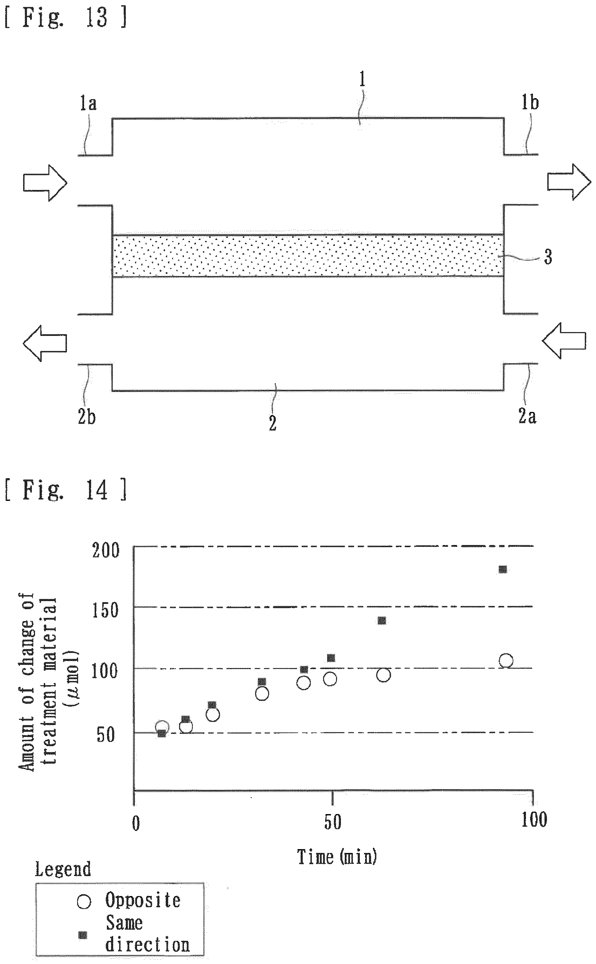

As with the above-described embodiment, an ion-exchange apparatus according to this embodiment is used to soften industrial water, produce pure water, or purify, for example, drinking water or cooling water for vehicles by removing impurity ions in liquids to be treated, and, as illustrated in Fig. 13, includes raw-water tank 1 provided with the inlet 1a and the outlet 1b in such a manner that a liquid to be treated is allowed to flow, and the treatment tank 2 provided with the inlet 2a and the outlet 2b in such a manner that the treatment material is allowed to flow.

In the present embodiment, the treatment tank 2 allows the treatment material to flow in the direction opposite to the liquid to be treated in the raw-water tank 1. That is, the liquid to be treated in the raw-water tank 1 is allowed to flow from left to right in Fig. 13, and the treatment material in the treatment tank 2 is allowed to flow from right to left in the figure, so that the liquid to be treated and the treatment material are allowed to flow in opposite directions with the ion exchanger 3 provided therebetween. As illustrated in Fig. 14, by allowing the liquid to be treated and the treatment material to flow in the opposite directions, it is possible to reduce the amount of change of the treatment material that increases with time (the amount of the treatment material that permeates and leaks from the treatment tank 2 to the raw-water tank 1).

A fourth embodiment according to the present invention will be described below.

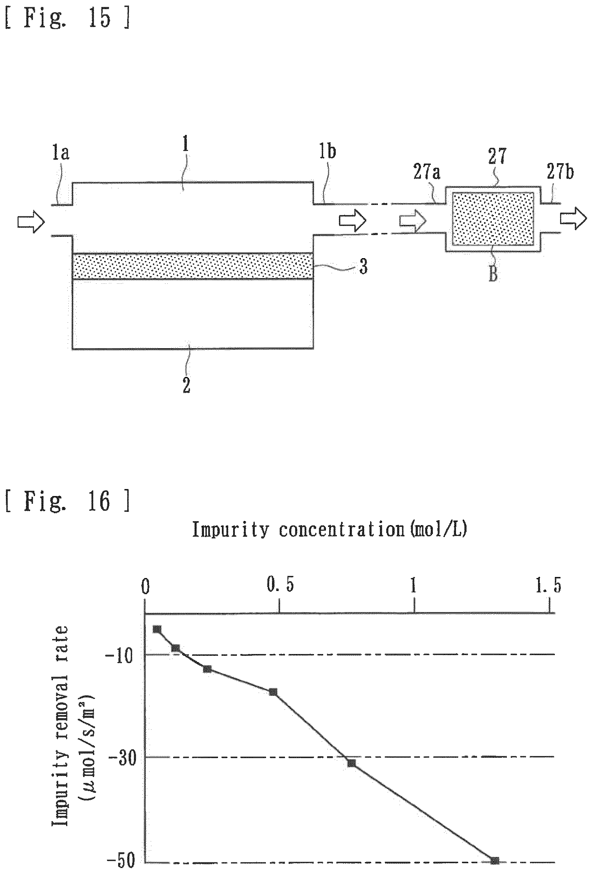

As with the above-described embodiment, an ion-exchange apparatus according to this embodiment is used to soften industrial water, produce pure water, or purify, for example, drinking water or cooling water for vehicles by removing impurity ions in liquids to be treated, and, as illustrated in Fig. 15, includes an auxiliary treatment section 27 packed with a granular ion exchanger B, in which the auxiliary treatment section 27 is connected downstream of the raw-water tank 1, and a liquid to be treated passed through the raw-water tank 1 can flow into the auxiliary treatment section 27.

Specifically, the auxiliary treatment section 27 is packed with the granular ion exchanger B and includes an inlet 27a, through which the liquid to be treated can flow, and an outlet 27b, through which the treated liquid can flow out. The inlet 27a communicates with the outlet 1b of the raw-water tank 1 with, for example, a connecting member provided therebetween. The granular ion exchanger B is formed of granules composed of the same material as that of the ion exchanger 3 and is composed of, for example, a granular resin. As described above, since the auxiliary treatment section 27 is connected downstream of the raw-water tank 1, the following effects can be provided.

In an ion-exchange apparatus that does not include the auxiliary treatment section 27, as illustrated in Fig. 16, the impurity removal rate is high at a high impurity concentration in a liquid to be treated. However, when the impurity concentration in the liquid to be treated reaches about zero (extremely low concentration), the impurity removal rate is low. In contrast, the granular ion exchanger B with which the auxiliary treatment section 27 is packed has a higher specific surface area than the membrane-like ion exchanger 3 and thus has a characteristic of a higher impurity removal rate. Thus, when the auxiliary treatment section 27 is connected downstream of the raw-water tank 1 as in the present embodiment, even if the impurities contained in the liquid to be treated reach about zero (extremely low concentration), the impurities can be removed by the granular ion exchanger B, and a decrease in impurity removal rate can be suppressed. Even if the ion exchanger 3 is damaged to cause the treatment material to flow into the liquid to be treated, the ion exchanger B of the auxiliary treatment section 27 can adsorb ions in the treatment material, thereby preventing a deterioration in water quality.

A fifth embodiment according to the present invention will be described below.

As with the above-described embodiment, an ion-exchange apparatus according to this embodiment is used to soften industrial water, produce pure water, or purify, for example, drinking water or cooling water for vehicles by removing impurity ions in liquids to be treated. The treatment material contained in the treatment tank 2 is composed of a material having a molecular weight of 80 g/mol or more. As described above, since the treatment material having a molecular weight of 80 g/mol or more is used, the following effects can be provided.

The ion exchanger 3 has microscopic pores (micropores) through which ions and atoms can pass. Thus, when a material having a small molecular weight is contained in the treatment tank 2 as a treatment material, the material may pass through the micropores of the ion exchanger 3 and move to the raw-water tank 1. For example, an experimental result revealed that when sodium chloride having a molecular weight of 58 (g/mol) was used as the treatment material, the amount of the treatment material permeated was about 0.22 (meq/cm³).

As described above, when a material having a small molecular weight is used as the treatment material, the treated liquid purified with the ion exchanger 3 is disadvantageously contaminated with the treatment material, thus decreasing the purification efficiency. In contrast, in the present embodiment, a material having a molecular weight of 80 g/mol or more is contained as a treatment material in the treatment tank 2; thus, it is possible to suppress the permeation of the treatment material through the ion exchanger 3 into the raw-water tank 1. For example, experimental results revealed that when sodium oxalate having a molecular weight of 134 (g/mol) was used as the treatment material contained in the treatment tank 2, the amount of the treatment material permeated was 0.15 (meq/cm³) and that when sodium diphosphate having a molecular weight of 266 (g/mol) was used, the amount of the treatment material permeated was zero (meq/cm³).

According to the above-described embodiment, the ion-exchange apparatus includes the raw-water tank containing a liquid to be treated, the liquid being composed of a liquid that contains impurity ions, the treatment tank (including the first treatment tank and the second treatment tank) containing a treatment material that contains exchange ions composed of ions exchangeable with the impurity ions, and the ion exchanger (including the cation exchanger and the anion exchanger) that permits the passage of the impurity ions from the raw-water tank to the treatment tank and the passage of the exchange ions from the treatment tank to the raw-water tank, in which the treatment material in the treatment tank has a higher molarity than the liquid to be treated in the raw-water tank. Thus, it is possible to provide the inexpensive ion-exchange apparatus without using a large amount of an expensive ion exchanger. Additionally, the amount (density) of the exchangeable ions in the treatment material is larger than those of existing ion-exchange resins, thus enabling an increase in ion-exchange capacity per volume.

A sixth embodiment according to the present invention will be described below.

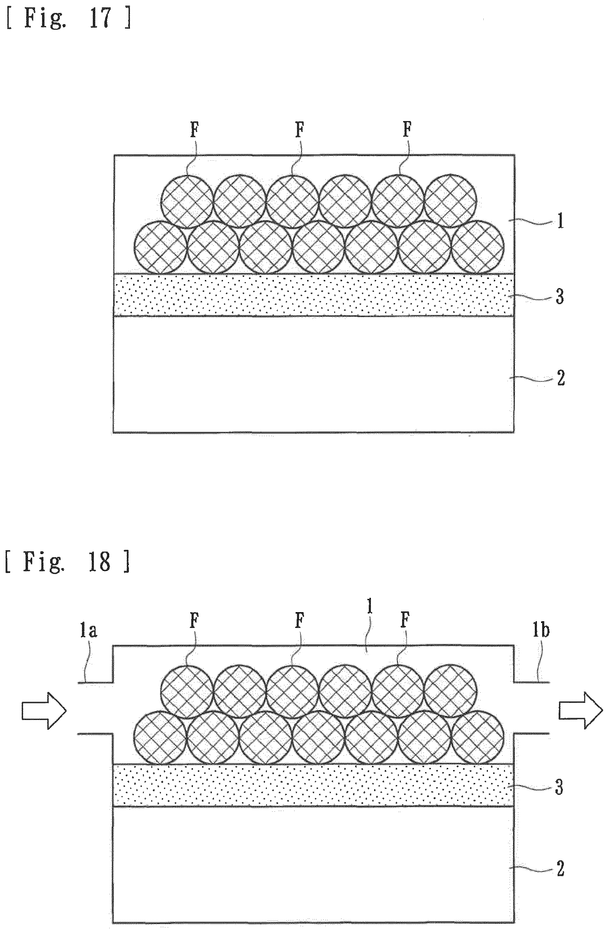

As with the above-described embodiment, an ion-exchange apparatus according to this embodiment is used to soften industrial water, produce pure water, or purify, for example, drinking water or cooling water for vehicles by removing impurity ions in liquids to be treated, and, as illustrated in Fig. 17, the raw-water tank 1 contains a packed ion exchanger F in contact with the ion exchanger 3. The packed ion exchanger F has the same composition and properties as those of the ion exchanger 3, has a spherical shape, and can ensure a large surface area.

That is, the packed ion exchanger F is packed into the raw-water tank 1 to adsorb impurity ions in the liquid to be treated and allows the impurity ions to pass through the packed ion exchanger F and to move to the ion exchanger 3 in contact therewith owing to the difference in concentration between the inside and the outside thereof. The impurity ions thus moved to the ion exchanger 3 can be removed by allowing the impurity ions to pass through the inside of the ion exchanger 3 to the treatment tank 2. In this case, as illustrated in Fig. 18, the raw-water tank 1 may include the inlet 1a and the outlet 1b in such a manner that the liquid to be treated is allowed to flow in a cavity packed with the spherical packed ion exchanger F.

A seventh embodiment according to the present invention will be described below.

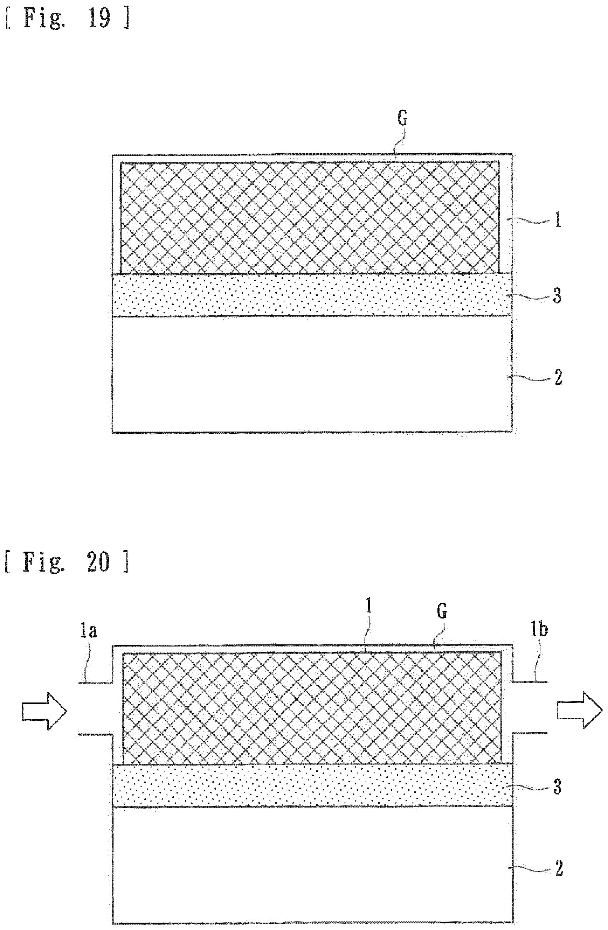

As with the above-described embodiment, an ion-exchange apparatus according to this embodiment is used to soften industrial water, produce pure water, or purify, for example, drinking water or cooling water for vehicles by removing impurity ions in liquids to be treated, and, as illustrated in Fig. 19, the raw-water tank 1 contains a packed ion exchanger G in contact with the ion exchanger 3. The packed ion exchanger G has the same composition and properties as those of the ion exchanger 3, has a fibrous shape, and can ensure a larger surface area.

That is, the packed ion exchanger G is packed into the raw-water tank 1 to adsorb impurity ions in the liquid to be treated and allows the impurity ions to pass through the packed ion exchanger G and to move to the ion exchanger 3 in contact therewith owing to the difference in concentration between the inside and the outside thereof. In particular, the movement path of the impurity ions can be widely secured by the entanglement of fibers. The impurity ions thus moved to the ion exchanger 3 can be removed by allowing the impurity ions to pass through the inside of the ion exchanger 3 to the treatment tank 2. In this case, as illustrated in Fig. 20, the raw-water tank 1 may include the inlet 1a and the outlet 1b in such a manner that the liquid to be treated is allowed to flow in a cavity packed with the fibrous packed ion exchanger G.

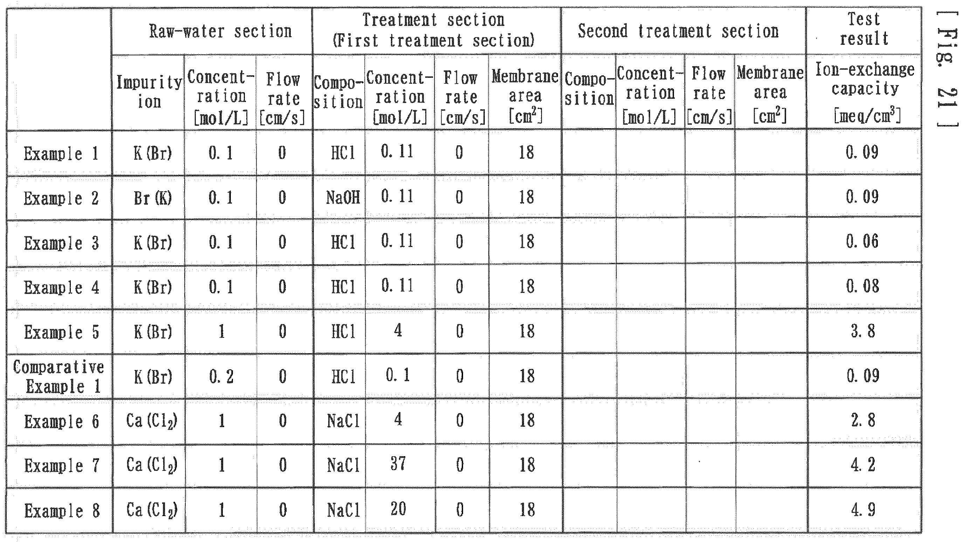

The experimental results exhibiting the technical superiority of the present invention will be described below using examples and comparative examples. (Regarding Examples 1 to 8 and Comparative Example 1: See Figs. 1 and 21)

Solutions having predetermined ion concentrations were prepared. Then 90 ml of each solution was placed in a PTFE resin container having a size of 34 × 64 × 54 mm (wall thickness: 2 mm, internal volume: 30 × 60 × 50 mm). An ion exchanger was disposed on a 34 × 64 plane. A container measuring 34 × 64 × 54 mm (wall thickness: 2 mm, internal volume: 30 × 60 × 50 mm) was disposed on the side on which the ionexchanger was disposed. The container was filled with 90 ml of a treatment material and covered with a lid while a pressure was applied with a clamp to prevent leakage of the liquid.

The molarities of impurities in the liquid to be treated and the treatment material were measured every one hour with an ion chromatograph (940 professional IC Vario, available from Metrohm) until no change was observed. When exchangeable ions remained in the treatment material, the liquid to be treated was replaced again, and the same measurement was performed. The measurement was repeated until no change in the concentration of ions exchangeable with impurity ions in the treatment material was observed. The ion-exchange capacity was calculated from the amount of impurity ions in the treatment material.

In Examples 1 to 8 and Comparative example 1, both the liquid to be treated and the treatment material were not allowed to flow. As the ion exchanger, an anion-exchange membrane Selemion AMVN, available from AGC, was used in Example 2. In Examples 1 and 3 to 8 and the comparative example, a cation-exchange membrane Selemion CMVN, available from AGC, was used.

(Example 1): A treatment material was 0.11 (mol/L) hydrochloric acid. A liquid to be treated was a 0.1 (mol/L) aqueous KBr solution. A treatment tank (treatment section) was connected to the lower side of a raw-water tank (raw-water section). The ion-exchange experiment was conducted with the ion exchanger having a membrane area of 18 cm² and revealed that the ion-exchange capacity was 0.09 (meq/cm³).

(Example 2): A treatment material was a 0.11 (mol/L) aqueous NaOH solution. A liquid to be treated was a 0.1 (mol/L) aqueous KBr solution. A treatment tank (treatment section) was connected to the lower side of a raw-water tank (raw-water section). The ion-exchange experiment was conducted with the ion exchanger having a membrane area of 18 cm² and revealed that the ion-exchange capacity was 0.09 (meq/cm³).

(Example 3): A treatment material was 0.11 (mol/L) hydrochloric acid. A liquid to be treated was a 0.1 (mol/L) aqueous KBr solution. A treatment tank (treatment section) was connected to the upper side of a raw-water tank (raw-water section). The ion-exchange experiment was conducted with the ion exchanger having a membrane area of 18 cm² and revealed that the ion-exchange capacity was 0.06 (meq/cm³).

(Example 4): A treatment material was 0.11 (mol/L) hydrochloric acid. A liquid to be treated was a 0.1 (mol/L) aqueous KBr solution. A treatment tank (treatment section) was connected to a raw-water tank (raw-water section) in the horizontal direction. The ion-exchange experiment was conducted with the ion exchanger having a membrane area of 18 cm² and revealed that the ion-exchange capacity was 0.08 (meq/cm³).

(Example 5): A treatment material was 4 (mol/L) hydrochloric acid. A liquid to be treated was a 1 (mol/L) aqueous KBr solution. The ion-exchange experiment was conducted with the ion exchanger having a membrane area of 18 cm² and revealed that the ion-exchange capacity was 3.8 (meq/cm³).

(Comparative Example 1): A treatment material was 0.1 (mol/L) hydrochloric acid. A liquid to be treated was a 0.2 (mol/L) aqueous KBr solution. The ion-exchange experiment was conducted with the ion exchanger having a membrane area of 18 cm² and revealed that the ion-exchange capacity was 0.09 (meq/cm³).

(Example 6): A treatment material was a 4 (mol/L) aqueous NaCl solution. A liquid to be treated was a 1 (mol/L) aqueous CaCl₂ solution. The ion-exchange experiment was conducted with the ion exchanger having a membrane area of 18 cm² and revealed that the ion-exchange capacity was 2.8 (meq/cm³).

(Example 7): A treatment material was 37 (mol/L) of solid NaCl. A liquid to be treated was a 1 (mol/L) aqueous CaCl₂ solution. The ion-exchange experiment was conducted with the ion exchanger having a membrane area of 18 cm² and revealed that the ion-exchange capacity was 4.2 (meq/cm³).

(Example 8): A treatment material was 20 (mol/L) of solid and liquid NaCl. A liquid to be treated was a 1 (mol/L) aqueous CaCl₂ solution. The ion-exchange experiment was conducted with the ion exchanger having a membrane area of 18 cm² and revealed that the ion-exchange capacity was 4.9 (meq/cm³).

According to Comparative example 1, it is found that the impurity ions in the liquid to be treated cannot be sufficiently removed because of a low molarity of the treatment material. According to Examples 5 to 8, it is found that at higher molarity of each of the treatment materials, an ion-exchange capacity of more than 2 (meq/cm³), which is the ion-exchange capacity of an existing ion-exchange resin, is obtained. According to Examples 7 and 8, it is found that a high ion-exchange capacity can be obtained even when a solid treatment material is used, and that a higher ion-exchange capacity can be obtained when the liquid and solid are used than when only a solid is used.

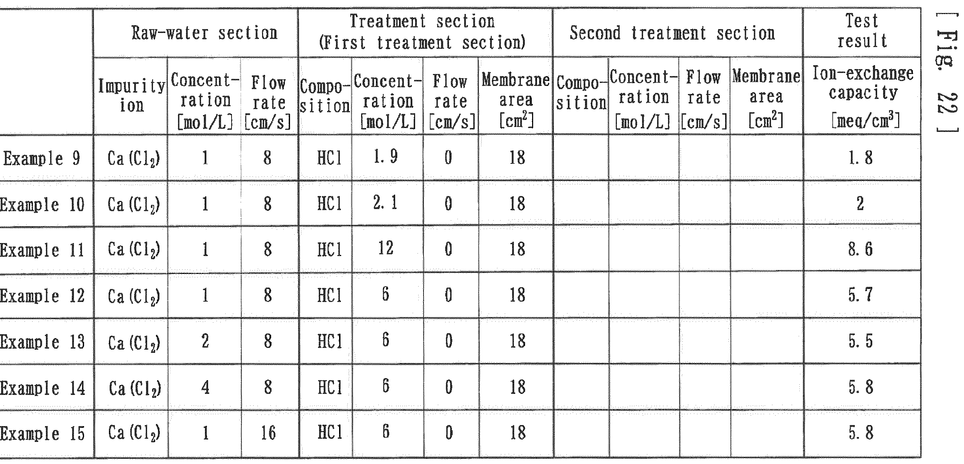

### (Regarding Examples 9 to 15: See Figs. 2 and 22)

A treatment material was placed in a PTFE resin container measuring 15 × 24 × 94 mm (wall thickness: 2 mm, internal volume: 11 × 20 × 90 mm). An ion exchanger was disposed on a 24 × 94 plane. A 15 × 24 × 94 mm container (thickness: 2 mm) was stacked with the ion exchanger provided therebetween to form a channel measuring 20 mm wide, 11 mm deep, and 90 mm long. The positional relationship between the raw-water section and the treatment section was horizontal. Solutions having predetermined ion concentrations were prepared. A liquid to be treated was allowed to flow at a flow rate of 1,000 mL/min. The molarities of impurities in the liquid to be treated in the raw-water section and in the treatment material in the treatment section were measured every one hour. The flow was continued until the molarities of the impurities in the liquid to be treated did not change. Then, the ion-exchange capacity was calculated on the basis of the molarities of the impurities removed from the liquid to be treated.

(Example 9): A treatment material was 1.9 (mol/L) hydrochloric acid. A liquid to be treated was a 1 (mol/L) aqueous CaCl₂ solution. The liquid to be treated in the raw-water tank (raw-water section) was allowed to flow at a flow rate of 8 (cm/s). The ion-exchange experiment was conducted with the ion exchanger having a membrane area of 18 cm² and revealed that the ion-exchange capacity was 1.8 (meq/cm³). (Example 10): A treatment material was 2.1 (mol/L) hydrochloric acid. A liquid to be treated was a 1 (mol/L) aqueous CaCl₂ solution. The liquid to be treated in the raw-water tank (raw-water section) was allowed to flow at a flow rate of 8 (cm/s). The ion-exchange experiment was conducted with the ion exchanger having a membrane area of 18 cm² and revealed that the ion-exchange capacity was 2 (meq/cm³).

(Example 11): A treatment material was 12 (mol/L) hydrochloric acid. A liquid to be treated was a 1 (mol/L) aqueous CaCl₂ solution. The liquid to be treated in the raw-water tank (raw-water section) was allowed to flow at a flow rate of 8 (cm/s). The ion-exchange experiment was conducted with the ion exchanger having a membrane area of 18 cm² and revealed that the ion-exchange capacity was 8.6 (meq/cm³). (Example 12): A treatment material was 6 (mol/L) hydrochloric acid. A liquid to be treated was a 1 (mol/L) aqueous CaCl₂ solution. The liquid to be treated in the raw-water tank (raw-water section) was allowed to flow at a flow rate of 8 (cm/s). The ion-exchange experiment was conducted with the ion exchanger having a membrane area of 18 cm² and revealed that the ion-exchange capacity was 5.7 (meq/cm³).

(Example 13): A treatment material was 6 (mol/L) hydrochloric acid. A liquid to be treated was a 2 (mol/L) aqueous CaCl₂ solution. The liquid to be treated in the raw-water tank (raw-water section) was allowed to flow at a flow rate of 8 (cm/s). The ion-exchange experiment was conducted with the ion exchanger having a membrane area of 18 cm² and revealed that the ion-exchange capacity was 5.5 (meq/cm³). (Example 14): A treatment material was 6 (mol/L) hydrochloric acid. A liquid to be treated was a 4 (mol/L) aqueous CaCl₂ solution. The liquid to be treated in the raw-water tank (raw-water section) was allowed to flow at a flow rate of 8 (cm/s). The ion-exchange experiment was conducted with the ion exchanger having a membrane area of 18 cm² and revealed that the ion-exchange capacity was 5.8 (meq/cm³).

(Example 15): A treatment material was 6 (mol/L) hydrochloric acid. A liquid to be treated was a 1 (mol/L) aqueous CaCl₂ solution. The liquid to be treated in the raw-water tank (raw-water section) was allowed to flow at a flow rate of 16 (cm/s). The ion-exchange experiment was conducted with the ion exchanger having a membrane area of 18 cm² and revealed that the ion-exchange capacity was 5.8 (meq/cm³).

According to Example 9 to 15, it is found that when the molarity of the treatment material is 2 (mol/L) or more, an ion-exchange capacity higher than that of the existing ion-exchange resin can be obtained.

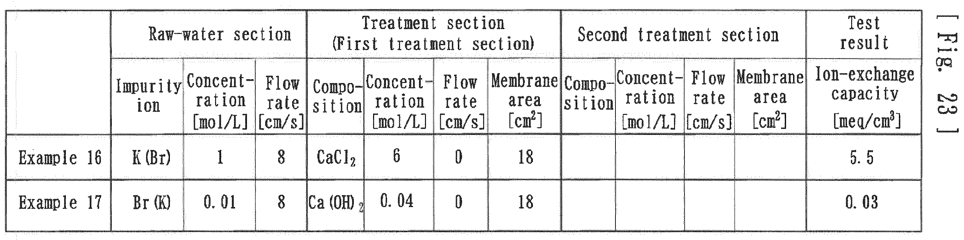

### (Regarding Examples 16 and 17: See Figs. 2 and 23)

The experimental method is the same as in Examples 9 to 15.

(Example 16): A treatment material was a 6 (mol/L) CaCl₂ solution. A liquid to be treated was a 1 (mol/L) aqueous KBr solution. The liquid to be treated in the raw-water tank (raw-water section) was allowed to flow at a flow rate of 8 (cm/s). This Example is an example in which a group 1 element and OH⁻ are not contained. The ion-exchange experiment was conducted with the ion exchanger having a membrane area of 18 cm² and revealed that the ion-exchange capacity was 5.5 (meq/cm³).

(Example 17): A treatment material was a 0.04 (mol/L) Ca(OH)₂ solution. A liquid to be treated was a 0.01 (mol/L) aqueous KBr solution. The liquid to be treated in the raw-water tank (raw-water section) was allowed to flow at a flow rate of 8 (cm/s). This Example is an example in which a group 1 element is not contained. The ion-exchange experiment was conducted with the ion exchanger having a membrane area of 18 cm² and revealed that the ion-exchange capacity was 0.03 (meq/cm³).

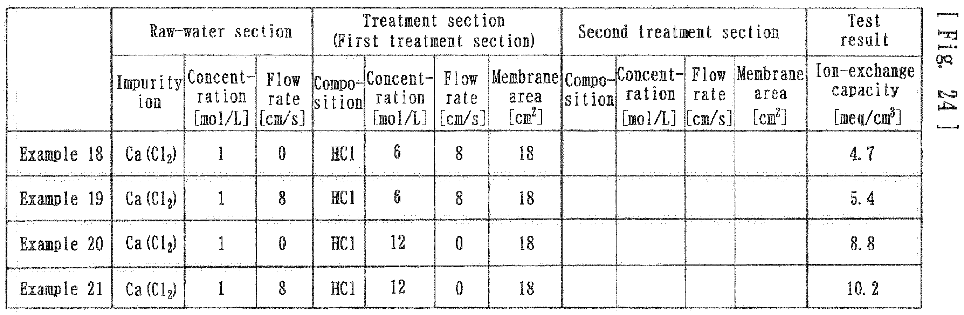

### (Regarding Examples 18 to 21: See Fig. 24)

(Example 18): A treatment material was 6 (mol/L) hydrochloric acid. A liquid to be treated was a 1 (mol/L) aqueous CaCl₂ solution. The treatment material in the treatment tank (treatment section) was allowed to flow at a flow rate of 8 (cm/s). This Example, as illustrated in Fig. 3, is an example in which the treatment material is allowed to flow without allowing the liquid to be treated to flow. The ion-exchange experiment was conducted with the ion exchanger having a membrane area of 18 cm² and revealed that the ion-exchange capacity was 4.7 (meq/cm³).

(Example 19): A treatment material was 6 (mol/L) hydrochloric acid. A liquid to be treated was a 1 (mol/L) aqueous CaCl₂ solution. The treatment material in the treatment tank (treatment section) and the liquid to be treated in the raw-water tank (raw-water section) were allowed to flow at a flow rate of 8 (cm/s). This Example, as illustrated in Fig. 4, is an example in which both the liquid to be treated and the treatment material are allowed to flow. The ion-exchange experiment was conducted with the ion exchanger having a membrane area of 18 cm² and revealed that the ion-exchange capacity was 5.4 (meq/cm³).

(Example 20): A treatment material was 12 (mol/L) hydrochloric acid. A liquid to be treated was a 1 (mol/L) aqueous CaCl₂ solution. The treatment material in the treatment tank (treatment section) and the liquid to be treated in the raw-water tank (raw-water section) were not allowed to flow. In this Example, as illustrated in Fig. 5, butyl rubber (2 mm wide, 0.5 mm thick) of 24 × 94 mm outer dimensions and 20 × 90 mm inner dimensions was interposed between the 24 × 94 planes and used as a sealing means.

(Example 21): A treatment material was 12 (mol/L) hydrochloric acid. A liquid to be treated was a 1 (mol/L) aqueous CaCl₂ solution. The liquid to be treated in the raw-water tank (raw-water section) was allowed to flow at a flow rate of 8 (cm/s). In this Example, as illustrated in Fig. 6, the liquid to be treated was allowed to flow without allowing the treatment material to flow, and stirring was performed with a stirring means. As the stirring means, a PTFE magnetic stirrer having a diameter of 5 mm and a length of 15 mm was used and rotated at a speed of 100 rpm.

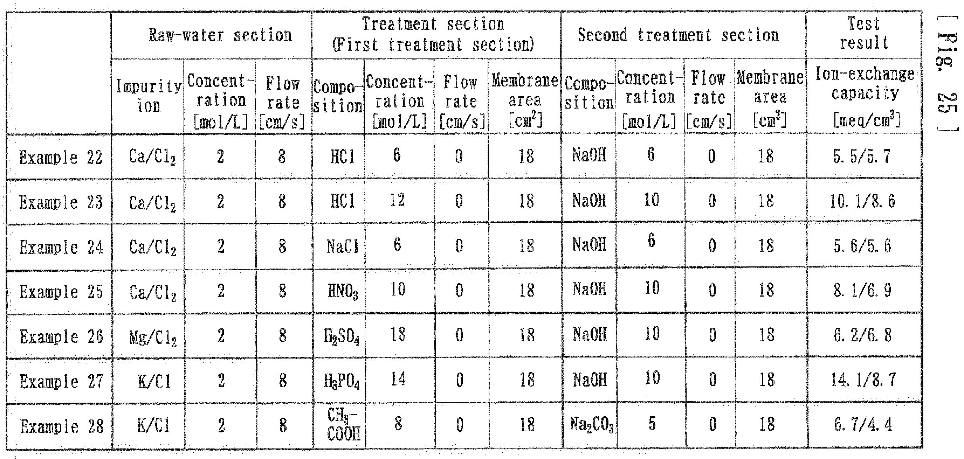

### (Regarding Examples 22 to 28: See Figs. 7 and 25)

A liquid to be treated was allowed to flow in a PTFE resin container having a size of 15 × 24 × 200 mm (wall thickness: 2 mm, internal volume: 11 × 20 × 200 mm). Containers each measuring 24 × 94 × 15 mm (wall thickness: 2 mm) were used as a first treatment tank and a second treatment tank. Ion exchangers were disposed at the entire 24 × 94 mm plane of each treatment tank.

(Example 22): A treatment material in a first treatment tank was 6 (mol/L) hydrochloric acid. A treatment material in a second treatment tank was a 6 (mol/L) NaOH solution. A liquid to be treated was a 2 (mol/L) aqueous CaCl₂ solution. The liquid to be treated in a raw-water tank (raw-water section) was allowed to flow at a flow rate of 8 (cm/s). The ion-exchange experiment was conducted with the ion exchangers each having a membrane area of 18 cm² and revealed that the ion-exchange capacity of the first treatment tank was 5.5 (meq/cm³) and that the ion-exchange capacity of the second treatment tank was 5.7 (meq/cm³).

(Example 23): A treatment material in a first treatment tank was 12 (mol/L) hydrochloric acid. A treatment material in a second treatment tank was a 10 (mol/L) NaOH solution. A liquid to be treated was a 2 (mol/L) aqueous CaCl₂ solution. The liquid to be treated in a raw-water tank (raw-water section) was allowed to flow at a flow rate of 8 (cm/s). The ion-exchange experiment was conducted with the ion exchangers each having a membrane area of 18 cm² and revealed that the ion-exchange capacity of the first treatment tank was 10.1 (meq/cm³) and that the ion-exchange capacity of the second treatment tank was 8.6 (meq/cm³).

(Example 24): A treatment material in a first treatment tank was a 6 (mol/L) NaCl solution. A treatment material in a second treatment tank was a 6 (mol/L) NaOH solution. A liquid to be treated was a 2 (mol/L) aqueous CaCl₂ solution. The liquid to be treated in a raw-water tank (raw-water section) was allowed to flow at a flow rate of 8 (cm/s). The ion-exchange experiment was conducted with the ion exchangers each having a membrane area of 18 cm² and revealed that the ion-exchange capacity of the first treatment tank was 5.6 (meq/cm³) and that the ion-exchange capacity of the second treatment tank was 5.6 (meq/cm³).

(Example 25): A treatment material in a first treatment tank was a 10 (mol/L) HNO₃ solution. A treatment material in a second treatment tank was a 10 (mol/L) NaOH solution. A liquid to be treated was a 2 (mol/L) aqueous CaCl₂ solution. The liquid to be treated in a raw-water tank (raw-water section) was allowed to flow at a flow rate of 8 (cm/s). The ion-exchange experiment was conducted with the ion exchangers each having a membrane area of 18 cm² and revealed that the ion-exchange capacity of the first treatment tank was 8.1 (meq/cm³) and that the ion-exchange capacity of the second treatment tank was 6.9 (meq/cm³).

(Example 26): A treatment material in a first treatment tank was a 18 (mol/L) H₂SO₄ solution. A treatment material in a second treatment tank was a 10 (mol/L) NaOH solution. A liquid to be treated was a 2 (mol/L) MgCl₂ solution. The liquid to be treated in a raw-water tank (raw-water section) was allowed to flow at a flow rate of 8 (cm/s). The ion-exchange experiment was conducted with the ion exchangers each having a membrane area of 18 cm² and revealed that the ion-exchange capacity of the first treatment tank was 6.2 (meq/cm³) and that the ion-exchange capacity of the second treatment tank was 6.8 (meq/cm³).

(Example 27): A treatment material in a first treatment tank was a 14 (mol/L) H₃PO₄ solution. A treatment material in a second treatment tank was a 10 (mol/L) NaOH solution. A liquid to be treated was a 2 (mol/L) KCl solution. The liquid to be treated in a raw-water tank (raw-water section) was allowed to flow at a flow rate of 8 (cm/s). The ion-exchange experiment was conducted with the ion exchangers each having a membrane area of 18 cm² and revealed that the ion-exchange capacity of the first treatment tank was 14.1 (meq/cm³) and that the ion-exchange capacity of the second treatment tank was 8.7 (meq/cm³).

(Example 28): A treatment material in a first treatment tank was a 8 (mol/L) CH₃COOH solution. A treatment material in a second treatment tank was a 5 (mol/L) Na₂CO₃ solution. A liquid to be treated was a 2 (mol/L) KCl solution. The liquid to be treated in a raw-water tank (raw-water section) was allowed to flow at a flow rate of 8 (cm/s). The ion-exchange experiment was conducted with the ion exchangers each having a membrane area of 18 cm² and revealed that the ion-exchange capacity of the first treatment tank was 6.7 (meq/cm³) and that the ion-exchange capacity of the second treatment tank was 4.4 (meq/cm³).

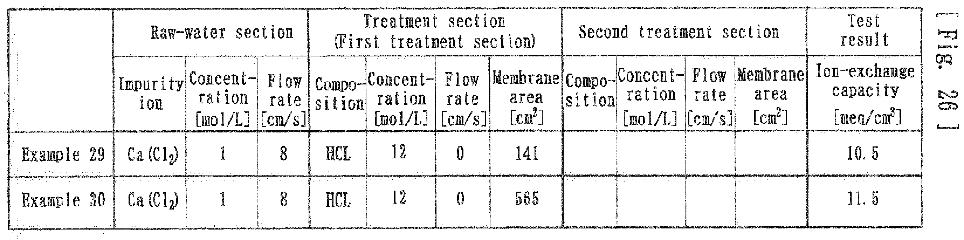

### (Regarding Examples 29 and 30: See Figs. 8 to 10 and 26)

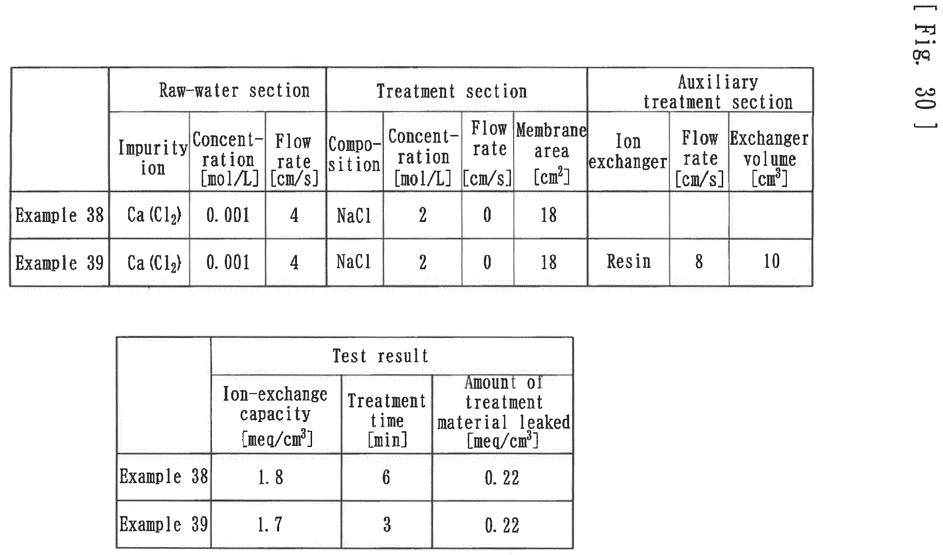

In Example 29, as illustrated in Figs. 8 and 9, an ion exchanger having a diameter of 15 mm extended in a cylindrical container having a diameter of 20 mm and a length of 300 mm. A liquid to be treated was allowed to flow through the ion exchanger. In Example 30, as illustrated in Fig. 10, 30 hollow fiber ion exchangers having an inside diameter of 2 mm extended in a cylindrical container having a diameter of 20 mm and a length of 300 mm. A liquid to be treated was allowed to flow through the ion exchangers.

(Example 29): A treatment material in a treatment tank was 12 (mol/L) hydrochloric acid. A liquid to be treated was a 1 (mol/L) aqueous CaCl₂ solution. The liquid to be treated in a raw-water tank (raw-water section) was allowed to flow at a flow rate of 8 (cm/s). The ion-exchange experiment was conducted with the tubular ion exchanger having a membrane area of 141 cm² and revealed that the ion-exchange capacity was 10.5 (meq/cm³).

(Example 30): A treatment material in a treatment tank was 12 (mol/L) hydrochloric acid. A liquid to be treated was a 1 (mol/L) aqueous CaCl₂ solution. The liquid to be treated in a raw-water tank (raw-water section) was allowed to flow at a flow rate of 8 (cm/s). The ion-exchange experiment was conducted with the hollow fiber ion exchangers having a membrane area of 565 cm² and revealed that the ion-exchange capacity was 11.5 (meq/cm³).

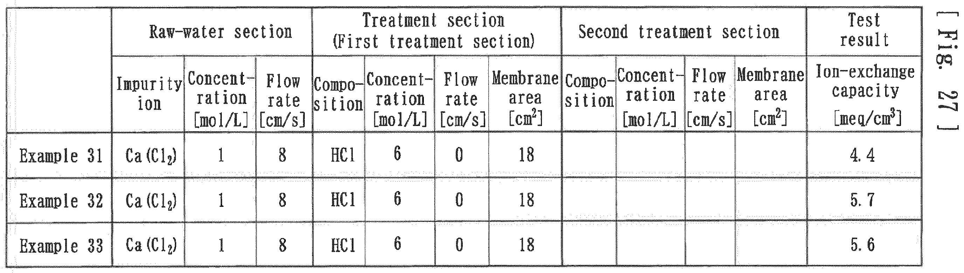

### (Regarding Examples 31 to 33: See Fig. 27)

In Example 31, a phosphogypsum (CaSO₄·PO₄) membrane was used as an ion exchanger. In Example 32, a double-network gel was used as an ion exchanger. The double-network gel is obtained by synthesizing a first network gel using an ion exchanger capable of removing impurity ions, a cross-linking agent, and a photoinitiator, and then impregnating the first network gel with a second network gel (the same material as the first network gel). In Example 33, an ion exchanger is formed on a support composed of a sheet-like fiber layer. The sheet-like fiber layer is obtained by preparing an impregnating solution containing an ion exchanger capable of removing impurity ions, a cross-linking agent, and a photoinitiator, and then impregnating the support composed of PET fibers with the solution.

(Example 31): A treatment material was 6 (mol/L) hydrochloric acid. A liquid to be treated was a 1 (mol/L) aqueous CaCl₂ solution. The liquid to be treated in the raw-water tank (raw-water section) was allowed to flow at a flow rate of 8 (cm/s). The ion-exchange experiment was conducted with the ion exchanger having a membrane area of 18 cm² and revealed that the ion-exchange capacity was 4.4 (meq/cm³).

(Example 32): A treatment material was 6 (mol/L) hydrochloric acid. A liquid to be treated was a 1 (mol/L) aqueous CaCl₂ solution. The liquid to be treated in the raw-water tank (raw-water section) was allowed to flow at a flow rate of 8 (cm/s). The ion-exchange experiment was conducted with the ion exchanger having a membrane area of 18 cm² and revealed that the ion-exchange capacity was 5.7 (meq/cm³).

(Example 33): A treatment material was 6 (mol/L) hydrochloric acid. A liquid to be treated was a 1 (mol/L) aqueous CaCl₂ solution. The liquid to be treated in the raw-water tank (raw-water section) was allowed to flow at a flow rate of 8 (cm/s). The ion-exchange experiment was conducted with the ion exchanger having a membrane area of 18 cm² and revealed that the ion-exchange capacity was 5.6 (meq/cm³).

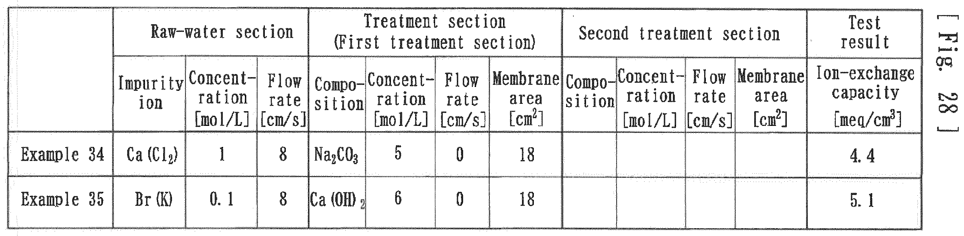

### (Regarding Examples 34 and 35: See Fig. 28)

(Example 34): A treatment material was 5 (mol/L) of solid and liquid Na₂CO₃. A liquid to be treated was a 1 (mol/L) CaCl₂ solution. The treated solution in the raw-water tank (raw-water section) was allowed to flow at a flow rate of 8 (cm/s). The ion-exchange experiment was conducted with the ion exchanger having a membrane area of 18 cm² and revealed that the ion-exchange capacity was 4.4 (meq/cm³).

(Example 35): A treatment material was 6 (mol/L) of solid and liquid Ca(OH)₂. A liquid to be treated was a 0.1 (mol/L) aqueous KBr solution. The treated solution in the raw-water tank (raw-water section) was allowed to flow at a flow rate of 8 (cm/s). The ion-exchange experiment was conducted with the ion exchanger having a membrane area of 18 cm² and revealed that the ion-exchange capacity was 5.1 (meq/cm³).

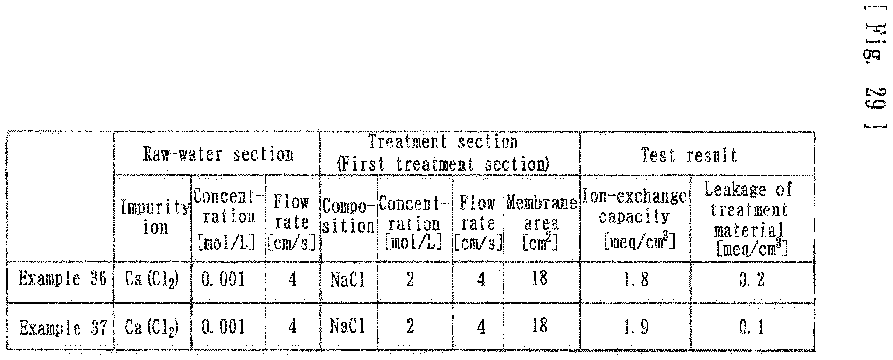

### (Regarding Examples 36 and 37: See Figs. 13 and 29)

The following experimental results obtained in Examples 36 and 37 indicate that the leakage of the treatment material can be suppressed to obtain a higher ion-exchange capacity by allowing the liquid to be treated in the raw-water tank 1 and the treatment material in the treatment tank 2 to flow in opposite directions.

(Example 36): In the raw-water tank 1, the impurity ion in a liquid to be treated was CaCl₂, the concentration was 0.001 (mol/L), and the flow rate was 4 (cm/s). In the treatment tank 2, the composition of a treatment material was NaCl, the concentration was 2 (mol/L), and the flow rate was 4 (cm/s). The ion-exchange experiment was conducted with the ion exchanger having a membrane area of 18 cm² while the liquid to be treated and the treatment material were allowed to flow in the same direction and revealed that the ion-exchange capacity was 1.8 (meq/cm³) and that the leakage of the treatment material (the amount of the treatment material permeated from the treatment section to the raw-water section) was 0.2 (meq/cm³).

(Example 37): In the raw-water tank 1, the impurity ion in a liquid to be treated was CaCl₂, the concentration was 0.001 (mol/L), and the flow rate was 4 (cm/s). In the treatment tank 2, the composition of a treatment material was NaCl, the concentration was 2 (mol/L), and the flow rate was 4 (cm/s). The ion-exchange experiment was conducted with the ion exchanger having a membrane area of 18 cm² while the liquid to be treated and the treatment material were allowed to flow in opposite directions (opposite directions indicated in Fig. 13) and revealed that the ion-exchange capacity was 1.9 (meq/cm³) and that the leakage of the treatment material (the amount of the treatment material permeated from the treatment section to the raw-water section) was 0.1 (meq/cm³).

### (Regarding Examples 38 and 39: See Figs. 15 and 30)

The following experimental results obtained in Examples 38 and 39 indicate that the treatment time can be reduced by the connection of the auxiliary treatment section 27, packed with the granular ion exchanger B, downstream of the raw-water tank 1, thereby enabling a reduction in the size of the ion-exchange apparatus. Other conditions were the same as in Example 9.

(Example 38): In the raw-water tank 1, the impurity ion in a liquid to be treated was CaCl₂, the concentration was 0.001 (mol/L), and the flow rate was 4 (cm/s). In the treatment tank 2, the composition of a treatment material was NaCl, the concentration was 2 (mol/L), and the flow rate was 0 (cm/s) (i.e., still water condition). The ion-exchange experiment was conducted with the ion exchanger having a membrane area of 18 cm² without connecting the auxiliary treatment section 27 and revealed that the ion-exchange capacity was 1.8 (meq/cm³), the leakage of the treatment material was 0.22 (meq/cm³), and the treatment time to reduce the impurity ions (Ca ions) in the liquid to be treated to equal to or less than 1 ppm was 6 (min).

(Example 39): In the raw-water tank 1, the impurity ion in a liquid to be treated was CaCl₂, the concentration was 0.001 (mol/L), and the flow rate was 4 (cm/s). In the treatment tank 2, the composition of a treatment material was NaCl, the concentration was 2 (mol/L), and the flow rate was 0 (cm/s) (i.e., still water condition). The ion-exchange experiment was conducted with the ion exchanger having a membrane area of 18 cm² while, as illustrated in Fig. 15, the auxiliary treatment section 27 (packed with the granular ion exchanger composed of a resin, flow rate: 8 (cm/s), and exchanger volume: 10 (cm³) (a container having inner dimensions of 5 × 2 × 1 cm was packed with the ion-exchange resin)) was connected and revealed that the ion-exchange capacity was 1.7 (meq/cm³), the leakage of the treatment material was 0.22 (meq/cm³), and the treatment time to reduce the impurity ions (Ca ions) in the liquid to be treated to equal to or less than 1 ppm was 3 (min).

### (Regarding Examples 40 and 41: See Figs. 17,18,19, 20, and 31)

The following experimental results obtained in Examples 40 and 41 revealed that the time required for ion exchange was reduced by packing the raw-water tank 1 with a spherical packed ion exchanger F in contact with the ion exchanger 3, and that the time required to remove impurity ions was further reduced by packing the raw-water tank 1 with a fibrous ion exchanger G in place of the spherical ion exchanger F.

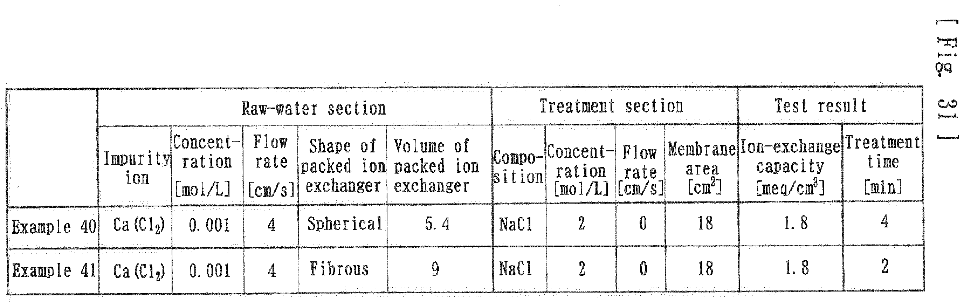

(Example 40): This is an example of a raw-water tank 1 packed with the spherical ion-exchange resin F. The spherical ion exchanger F (ion-exchange resin) having a diameter of about 0.5 mm was packed to a height of 3 mm while in contact with the ion exchanger 3. Other than that, the experiment was performed in the same manner as in Example 38. The results indicated that, as illustrated in Fig. 31, the ion-exchange capacity was 1.8 (meq/cm³), and the treatment time to reduce impurity ions (Ca ions) in the liquid to be treated to equal to or less than 1 ppm was 4 (min).

(Example 41): This is an example of the raw-water tank 1 packed with a fibrous ion exchanger G. The fibrous ion exchanger G (non-woven fabric) was processed into 20 × 90 mm using Muromac NWF-SC, available from Muromachi Chemicals Inc., and packed while in contact with the ion exchanger 3. Other than that, the experiment was performed in the same manner as in Example 38. The results indicated that, as illustrated in Fig. 31, the ion-exchange capacity was 1.8 (meq/cm³), and the treatment time to reduce impurity ions (Ca ions) in the liquid to be treated to equal to or less than 1 ppm was 2 (min).

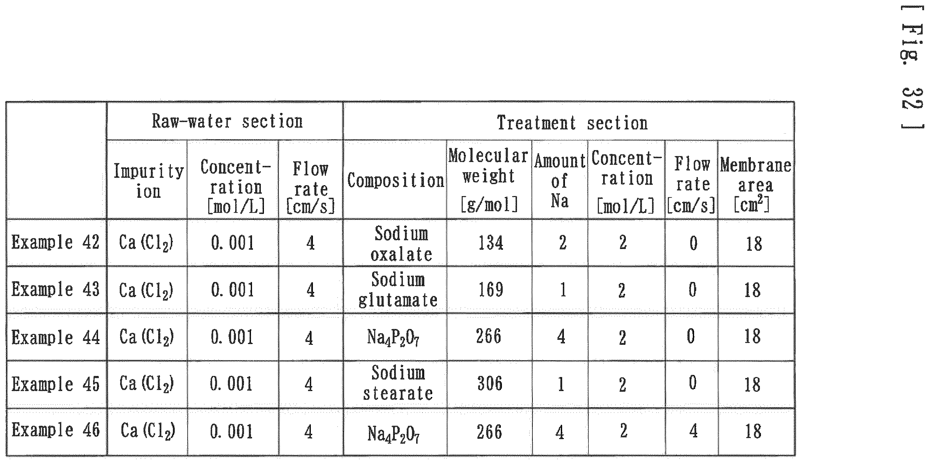

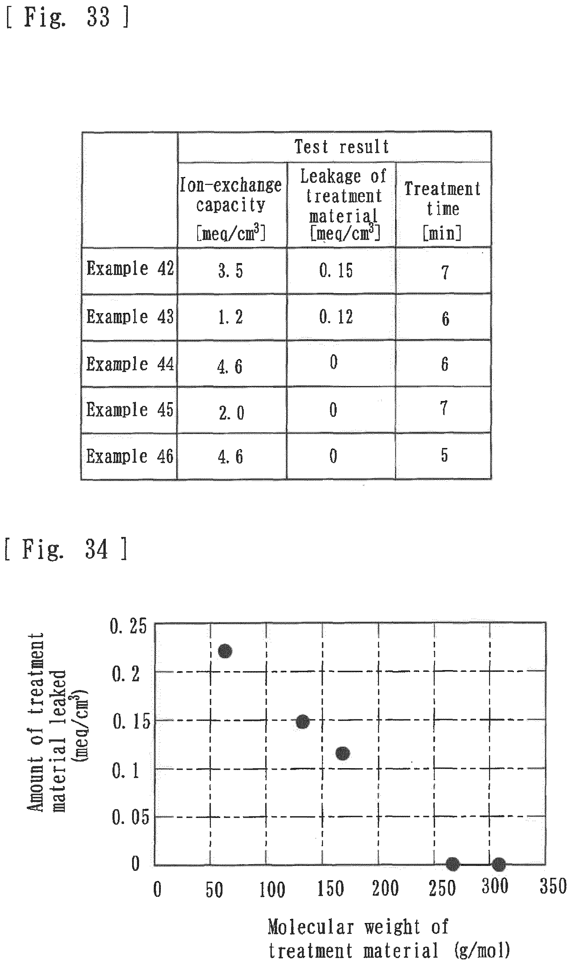

### (Regarding Examples 42 to 46: See Figs. 32 and 33)

The following experimental results obtained in Examples 42 to 46 reveal that the use of a material having a large molecular weight as a treatment material can suppress leakage of the treatment material, thereby achieving a higher ion-exchange capacity. In particular, according to Example 46, the treatment time to reduce the impurity ions (Ca ions) in the liquid to be treated to equal to or less than 1 ppm can be shortened by allowing the treatment material having a large molecular weight as illustrated in Fig. 3, thereby enabling a reduction in the size of the ion-exchange apparatus.

(Example 42): In the raw-water tank 1, the impurity ion in a liquid to be treated was CaCl₂, the concentration was 0.001 (mol/L), and the flow rate was 4 (cm/s). In the treatment tank 2, the composition of a treatment material was sodium oxalate (molecular weight: 134 (g/mol), the number of Na atoms per molecule: two), the concentration was 2 (mol/L), and the flow rate was 0 (cm/s) (i.e., still water condition). The ion-exchange experiment was conducted with the ion exchanger having a membrane area of 18 cm² and revealed that, as illustrated in Fig. 33, the ion-exchange capacity was 3.5 (meq/cm³), the leakage of the treatment material was 0.15 (meq/cm³), and the treatment time was 7 (min).

(Example 43): In the raw-water tank 1, the impurity ion in a liquid to be treated was CaCl₂, the concentration was 0.001 (mol/L), and the flow rate was 4 (cm/s). In the treatment tank 2, the composition of a treatment material was sodium glutamate (molecular weight: 169 (g/mol), the number of Na atoms per molecule: one), the concentration was 2 (mol/L), and the flow rate was 0 (cm/s) (i.e., still water condition). The ion-exchange experiment was conducted with the ion exchanger having a membrane area of 18 cm² and revealed that, as illustrated in Fig. 33, the ion-exchange capacity was 1.2 (meq/cm³), the leakage of the treatment material was 0.12 (meq/cm³), and the treatment time was 6 (min).

(Example 44): In the raw-water tank 1, the impurity ion in a liquid to be treated was CaCl₂, the concentration was 0.001 (mol/L), and the flow rate was 4 (cm/s). In the treatment tank 2, the composition of a treatment material was Na₄P₂O₇ (molecular weight: 266 (g/mol), the number of Na atoms per molecule: four), the concentration was 2 (mol/L), and the flow rate was 0 (cm/s) (i.e., still water condition). The ion-exchange experiment was conducted with the ion exchanger having a membrane area of 18 cm² and revealed that, as illustrated in Fig. 33, the ion-exchange capacity was 4.6 (meq/cm³), the leakage of the treatment material was 0 (meq/cm³), and the treatment time was 6 (min).

(Example 45): In the raw-water tank 1, the impurity ion in a liquid to be treated was CaCl₂, the concentration was 0.001 (mol/L), and the flow rate was 4 (cm/s). In the treatment tank 2, the composition of a treatment material was sodium stearate (molecular weight: 306 (g/mol), the number of Na atoms per molecule: one), the concentration was 2 (mol/L), and the flow rate was 0 (cm/s) (i.e., still water condition). The ion-exchange experiment was conducted with the ion exchanger having a membrane area of 18 cm² and revealed that, as illustrated in Fig. 33, the ion-exchange capacity was 2.0 (meq/cm³), the leakage of the treatment material was 0 (meq/cm³), and the treatment time was 7 (min).

(Example 46): In the raw-water tank 1, the impurity ion in a liquid to be treated was CaCl₂, the concentration was 0.001 (mol/L), and the flow rate was 4 (cm/s). In the treatment tank 2, the composition of a treatment material was Na₄P₂O₇ (molecular weight: 266 (g/mol), the number of Na atoms per molecule: four), the concentration was 2 (mol/L), and the flow rate was 4 (cm/s). The ion-exchange experiment was conducted with the ion exchanger having a membrane area of 18 cm² and revealed that, as illustrated in Fig. 33, the ion-exchange capacity was 4.6 (meq/cm³), the leakage of the treatment material was 0 (meq/cm³), and the treatment time was 5 (min).

Fig. 34 illustrates the relationship between the molecular weight of the treatment material and the amount of leakage of the treatment material. When the molecular weight is 80 g/mol or more, the amount permeated can be reduced to as low as less than 0.2 (meq/cm³). When the molecular weight is 200 g/mol or more, the amount of the treatment material permeated can be reduced to zero, which is preferable.

While the present embodiment has been described above, the present invention is not limited thereto. For example, the sizes and shapes of the raw-water tank (raw-water section) and the treatment tanks (first treatment tank and second treatment tank) can be variously set. Any liquid to be treated and any treatment material can be used as long as the treatment material in the treatment tank (treatment section) has a higher molarity than the liquid to be treated in the raw-water tank (raw-water section).

### Industrial Applicability

The present invention can also be applied to an ion-exchange apparatus to which another means is added as long as the treatment material in the treatment section has a higher molarity than the liquid to be treated in the raw-water section. Reference Signs List

1 raw-water tank (raw-water section)
1a inlet
1b outlet
2 treatment tank (treatment section)
2a inlet
2b outlet
3 ion exchanger
4 sealing means
5 stirring means
6 first treatment tank (first treatment section)
7 cation exchanger
8 second treatment tank (second treatment section)
9 anion exchanger
10 raw-water section
11 treatment section
12 ion exchanger
13 raw-water section
14 cation exchanger
15 first treatment section
16 connecting member
17 raw-water section
18 anion exchanger
19 second treatment section
20 raw-water section
20a inlet
20b outlet
21 first treatment section
22 ion exchanger
23 second treatment section
24 ion exchanger
25 third treatment section
26 ion exchanger
27 auxiliary treatment section
27a inlet
27b outlet
B ion exchanger
F spherical packed ion exchanger
G fibrous packed ion exchanger

## Claims

1. An ion-exchange apparatus comprising:
a raw-water section containing a liquid to be treated, the liquid being composed of a liquid that contains impurity ions;
a treatment section containing a treatment material that contains exchange ions composed of ions exchangeable with the impurity ions; and
an ion exchanger that permits passage of the impurity ions from the raw-water section to the treatment section and passage of the exchange ions from the treatment section to the raw-water section,
wherein the treatment material in the treatment section has a higher molarity than the liquid to be treated in the raw-water section.

2. The ion-exchange apparatus according to Claim 1, wherein the treatment material in the treatment section has a molarity of 2 mol/L or more.

3. The ion-exchange apparatus according to Claim 1 or 2, wherein the raw-water section is capable of allowing the liquid to be treated to flow.

4. The ion-exchange apparatus according to Claim 3, wherein the treatment section is capable of allowing the treatment material to flow in a direction opposite to the liquid to be treated.

5. The ion-exchange apparatus according to Claim 3 or 4, further comprising an auxiliary treatment section packed with a granular ion exchanger, wherein the auxiliary treatment section is connected downstream of the raw-water section, and the liquid to be treated passed through the raw-water section is capable of flowing into the auxiliary treatment section.

6. The ion-exchange apparatus according to any one of Claims 1 to 5, wherein the raw-water section contains a packed ion exchanger in contact with the ion exchanger.

7. The ion-exchange apparatus according to Claim 6, wherein the packed ion exchanger is composed of a spherical or fibrous ion exchanger.

8. The ion-exchange apparatus according to any one of Claims 1 to 7, wherein the treatment section is provided with a stirring means capable of stirring the treatment material.

9. The ion-exchange apparatus according to any one of Claims 1 to 8, wherein a sealing means that seals at least one of a joint portion between the raw-water section and the ion exchanger and a joint portion between the treatment section and the ion exchanger is disposed.

10. The ion-exchange apparatus according to any one of Claims 1 to 9, wherein the exchange ions are composed of group 1 element ions or hydroxide ions.

11. The ion-exchange apparatus according to any one of Claims 1 to 10, wherein the treatment material contains a weak acid or a weak base.

12. The ion-exchange apparatus according to any one of Claims 1 to 11, wherein the treatment material is a solution containing group 1 element ions.

13. The ion-exchange apparatus according to any one of Claims 1 to 12, wherein the ion-exchange apparatus includes a first treatment section in which the exchange ions are composed of group 1 element ions, and
a second treatment section in which the exchange ions are hydroxide ions,
wherein each of the first treatment section and the second treatment section is connected to the raw-water section with the ion exchanger provided therebetween.

14. The ion-exchange apparatus according to any one of Claims 1 to 13, wherein the treatment material contained in the treatment section is composed of a material having a molecular weight of 80 g/mol or more.

15. The ion-exchange apparatus according to any one of Claims 1 to 14, wherein the ion exchanger has a tubular shape, a flat-film shape, or a hollow-fiber shape.

16. The ion-exchange apparatus according to any one of Claims 1 to 15, wherein the ion exchanger is composed of an ion-exchange resin membrane.

17. The ion-exchange apparatus according to any one of Claims 1 to 16, wherein the ion exchanger is composed of a double-network gel.

18. The ion-exchange apparatus according to any one of Claims 1 to 17, wherein the ion exchanger is disposed on a support composed of a sheet-like fiber layer.
